# EUROPEAN PATENT APPLICATION

(11) **EP 4 797 833 A1**
(43) Date of publication of application: **26.08.2026**
(21) Application number: 24890243.9
(22) Date of filing: 21.08.2024
(51) Int. Cl.: H04W 72/044

(54) **COMMUNICATION METHOD AND RELATED DEVICE**

(30) Priority: 15.11.2023 CN 202311531770
(71) Applicant: HUAWEI TECHNOLOGIES CO., LTD., Shenzhen, Guangdong 518129 (CN)
(72) Inventor: QI, Hong, Shenzhen, Guangdong 518129 (CN); ZHANG, Yi, Shenzhen, Guangdong 518129 (CN); SU, Hongjia, Shenzhen, Guangdong 518129 (CN); LIU, Yating, Shenzhen, Guangdong 518129 (CN)
(74) Representative: Gill Jennings & Every LLP
(86) International application number: PCT/CN2024/113573
(87) International publication number: WO 2025/102881

(57) **Abstract**

This application provides a communication method and a related device, which may be applied to systems such as an internet of vehicles, V2X, and V2V, to implement beam management. In the method, a first communication apparatus determines a third signal by using information carried in M groups of received second signals, and the first communication apparatus may further determine a transmit beam of the first communication apparatus based on a feedback resource corresponding to the third signal. Therefore, the first communication apparatus serves as a signal transmitter of the M first signals, and a transmit beam of the signal transmitter may be determined by using a resource configuration manner of a feedback resource corresponding to a signal sent by the signal transmitter, to implement beam management. In addition, the first communication apparatus may further send first information, so that the signal transmitter determines a first group of time units in N groups of time units based on the first information. In other words, a transmit beam of a signal receiver may be determined by using the first information sent by the signal transmitter, to implement beam management.

## Description

This application claims priority to Chinese Patent Application No. 202311531770.4, filed with the China National Intellectual Property Administration on November 15, 2023 and entitled "COMMUNICATION METHOD AND RELATED DEVICE", which is incorporated herein by reference in its entirety.

### TECHNICAL FIELD

This application relates to the field of wireless communication technologies, and in particular, to a communication method and a related device.

### BACKGROUND

In a communication system, different terminal devices may directly communicate with each other without using a network device. This communication manner is referred to as sidelink (sidelink, SL) communication.

Currently, in an SL communication process, different terminal devices may communicate with each other by using a multiple-input multiple-output (multiple-input multiple-output, MIMO) technology, to satisfy a high-rate transmission requirement. In a MIMO technology-based communication process, a signal transmitter and a signal receiver each may have a plurality of communication beams.

However, for the signal transmitter and the signal receiver, how to perform beam management on the communication beams is an urgent technical problem to be resolved.

### SUMMARY

This application provides a communication method and a related device, to implement beam management.

A first aspect of this application provides a communication method. The method is performed by a first communication apparatus. The first communication apparatus may be a communication device (such as a terminal device), or the first communication apparatus may be some components (such as a processor, a chip, or a chip system) in a communication device, or the first communication apparatus may be a logical module or software that can implement all or some functions of a communication device. In the method, the first communication apparatus sends M first signals in each of N groups of time units, where the M first signals are respectively carried in M time units in each group of time units, and both N and M are integers greater than 1; the first communication apparatus receives M groups of second signals, where the M groups of second signals are used to determine a third signal in the M first signals, an i^{th} group of second signals in the M groups of second signals is carried in an i^{th} group of time domain resources in M groups of time domain resources, the i^{th} group of time domain resources in the M groups of time domain resources is feedback resources for an i^{th} first signal in the M first signals, each of the M groups of time domain resources includes X resources, i is a positive integer less than or equal to M, and X is a positive integer less than or equal to N; and the first communication apparatus sends first information, where the first information is used to determine a first group of time units in the N groups of time units.

Based on the foregoing technical solution, after the first communication apparatus sends the M signals in each of the N groups of time units through M communication beams, the first communication apparatus may receive the M groups of second signals, and the first communication apparatus may determine the third signal in the M first signals based on the M groups of second signals. In other words, the first communication apparatus may determine, based on the third signal, a transmit beam corresponding to the third signal, and subsequently, the first communication apparatus may send a signal/data/information or the like based on the transmit beam. The i^{th} group of second signals in the M groups of second signals is carried in the i^{th} group of time domain resources in the M groups of time domain resources, the i^{th} group of time domain resources in the M groups of time domain resources is the feedback resources for the i^{th} first signal in the M first signals. In other words, in addition to determining the third signal by using information carried in the M groups of second signals, the first communication apparatus may further determine a transmit beam (or an optimal transmit beam) of the first communication apparatus based on a feedback resource corresponding to the third signal. Therefore, the first communication apparatus serves as a signal transmitter of the M first signals, and a transmit beam of the signal transmitter may be determined by using a resource configuration manner (or a resource preconfiguration manner) of a feedback resource corresponding to a signal sent by the signal transmitter, to implement beam management.

In addition, the first communication apparatus may further send the first information, so that a receiver of the first information (that is, a signal receiver of the M first signals, for example, a second communication apparatus) determines the first group of time units in the N groups of time units based on the first information. In other words, a transmit beam (or an optimal transmit beam) of the signal receiver may be determined by using the first information sent by the signal transmitter, to implement beam management.

In this application, in time-domain-related resources (for example, any one of the N groups of time units, any one of the M groups of time domain resources, any one of the X resources, any one of M resources mentioned below, or any one of X time domain units mentioned below), each resource may include one or more time units, and the time unit may be a symbol, a slot (slot), a mini-slot (mini-slot), a subframe, or a frame.

In this application, the M groups of first signals may be reference signals, for example, sidelink synchronization signal blocks (sidelink synchronization signal block, S-SSB or SL-SSB), sidelink channel state information reference signals (sidelink channel state information reference signal, SL-CSI-RS), or sidelink demodulation reference signals (sidelink demodulation reference signal, SL-DMRS).

In this application, for the first communication apparatus and/or the second communication apparatus, a resource used to carry a signal (for example, the N groups of time units used to carry the M first signals, or the M groups of time domain resources used to carry the M groups of second signals) may be determined in a plurality of manners, for example, preconfigured in a protocol/standard, configured by a network device, or predefined.

Optionally, for the first communication apparatus and/or the second communication apparatus, a value of N and a value of M may be preconfigured in a protocol/standard, or may be configured by a network device, or may be predefined. This is not limited herein.

It should be noted that, in the N groups of time units, each group of time units is used to send the M first signals, that is, each group of time units includes M resources used to carry the M first signals. The M resources included in each of the N groups of time units may be implemented in a plurality of manners. In the following examples, that N is greater than 2 is used for description.

Implementation example 1: In time domain, M resources included in a j^{th} (a value of j ranges from 1 to N-1) group of time units in the N groups of time units are all located before a (j+1)^{th} group of time units.

In other words, in the implementation example 1, in the N groups of time units, after sending the M first signals for the first time based on M beams (that is, after sending the first signals through scanning on the M beams for the first time), the first communication apparatus may send the M first signals for the second time based on the M beams, and by analogy, send the M first signals for the N^{th} time based on the M beams. Correspondingly, in the N groups of time units, after receiving the M first signals based on a first beam in N beams, the second communication apparatus may receive the M first signals based on a second beam in the N beams, and by analogy, receive the M first signals based on an N^{th} beam in the N beams.

For example, in the implementation example 1, in the N groups of time units, after sending the M first signals included in the first group of time units, the first communication apparatus sends the M first signals included in a second group of time units. By analogy, after the first communication apparatus sends the M first signals included in an N^{th} group of time units, the first communication apparatus completes a process of sending the M first signals in each of the N groups of time units.

Correspondingly, in the implementation example 1, a receiver (namely, the second communication apparatus) of the M first signals may fixedly use one beam for reception in M beams in a single group in the N groups. In other words, the second communication apparatus respectively receives the M first signals in the N groups of time units based on the N beams. For example, the second communication apparatus receives the M first signals in a j^{th} group of time units in the N groups of time units based on a j^{th} beam in the N beams, where j is a positive integer less than or equal to X (X is less than or equal to N).

Optionally, in the implementation example 1, in the N groups of time units, M resources included in any group of time units may be consecutive time resources in time domain.

Implementation example 2: In time domain, an i^{th} resource in M resources included in a j^{th} (a value of j ranges from 1 to N-1) group of time units in the N groups of time units is located before an i^{th} resource in M resources included in a (j+1)^{th} group of time units, and an (i+1)^{th} resource in the M resources included in the j^{th} group of time units in the N groups of time units is located after the i^{th} resource in the M resources included in the (j+1)^{th} group of time units.

In other words, in the implementation example 2, in the N groups of time units, after sending a 1^{st} first signal in the M first signals for N times based on a first beam in M beams, the first communication apparatus may send a 2^{nd} first signal in the M first signals for N times based on a second beam in the M beams, and by analogy, send an M^{th} first signal in the M first signals for N times based on an M^{th} beam in the M beams. Correspondingly, in the N groups of time units, after receiving the 1^{st} first signal in the M first signals based on the first beam in N beams, the second communication apparatus may receive the 2^{nd} first signal in the M first signals based on a second beam in the N beams, and by analogy, receives the M^{th} first signal in the M first signals based on an N^{th} beam in the N beams.

Correspondingly, in the implementation example 2, a receiver (namely, the second communication apparatus) of the M first signals may fixedly use one beam for reception in M beams in a single group in the N groups. In other words, the second communication apparatus respectively receives the M first signals in the N groups of time units based on the N beams. For example, the second communication apparatus receives the M first signals in a j^{th} group of time units in the N groups of time units based on a j^{th} beam in the N beams.

For example, in the implementation example 2, in the N groups of time units, after sending the 1^{st} first signal in the M first signals included in the first group of time units, the first communication apparatus sends the 1^{st} first signal in the M first signals included in the second group of time units, ..., and the first communication apparatus sends the 1^{st} signal in the M first signals included in the N^{th} group of time units. Then, after sending the 2^{nd} first signal in the M first signals included in the first group of time units, the first communication apparatus sends the 2^{nd} first signal in the M first signals included in the second group of time units, ..., and the first communication apparatus sends the 1^{st} signal in the M second signals included in the N^{th} group of time units. By analogy, after sending the M^{th} first signal in the M first signals included in the first group of time units, the first communication apparatus sends the M^{th} first signal in the M first signals included in the second group of time units, ..., and after the first communication apparatus sends the M^{th} signal in the M second signals included in the N^{th} group of time units, the first communication apparatus completes a process of sending the M first signals in each of the N groups of time units.

It may be understood that in the implementation example 2, in the N groups of time units, M resources included in any group of time units are inconsecutive time resources in time domain.

Optionally, the process in which the first communication apparatus sends the M first signals in each of the N groups of time units may be understood as: The first communication apparatus sends N first signals in each of the M groups of time units. Correspondingly, for an implementation process in which the first communication apparatus sends N first signals in each of the M groups of time units, refer to the implementation processes in the foregoing two implementation examples.

In this application, that a resource is located before or after another resource may mean a time relationship in time domain. For example, that a resource is located before another resource may be understood as that a resource index of the resource is less than a resource index of the another resource. Correspondingly, that a resource is located after another resource may be understood as that a resource index of the resource is greater than a resource index of the another resource.

In a possible implementation of the first aspect, signal quality information of the M first signals sent in the N groups of time units is used to determine a second group of time units in the N groups of time units.

In this application, the signal quality information may be implemented in a plurality of manners, for example, at least one of a received signal strength indication (received signal strength indication, RSSI), reference signal received power (reference signal received power, RSRP), and reference signal received quality (reference signal received quality, RSRQ).

Based on the foregoing technical solution, the second communication apparatus serves as a receiver of the M first signals, and the second communication apparatus may respectively use N beams for reception in the N groups of time units. Then, the second communication apparatus may determine signal quality information respectively corresponding to the N groups of time units, determine a time unit corresponding to signal quality information with highest signal quality as the second group of time units, and determine a beam corresponding to the second group of time units as a receive beam (or an optimal receive beam) of the second communication apparatus. In other words, the second communication apparatus may determine the receive beam (or the optimal receive beam) of the second communication apparatus based on the signal quality information of the M first signals sent in the N groups of time units, and subsequently may receive a signal/information/data based on the receive beam, to improve receiving quality in the receiving process.

Optionally, in a plurality of pieces of signal quality information (for example, signal quality information of the M first signals, signal quality information of M groups of second signals mentioned below, or X pieces of signal quality information mentioned below), signal quality information (for example, referred to as target signal quality information) with highest signal quality may be understood as that the target signal quality information is greater than or equal to other signal quality information in the plurality of pieces of signal quality information. In other words, in the plurality of pieces of signal quality information, if signal quality indicated by two or more pieces of signal quality information is the same and is greater than signal quality indicated by other signal quality information, the target signal quality information may be one of the two or more pieces of signal quality information (for example, signal quality information corresponding to a signal with a smallest index value, or signal quality information corresponding to a signal with a largest index value).

Optionally, when a receive beam and a transmit beam of the second communication apparatus are different, the second group of time units in the N groups of time units is different from the first group of time units.

Optionally, when a receive beam and a transmit beam of the second communication apparatus are the same, the second group of time units in the N groups of time units is the same as the first group of time units. The second communication apparatus may determine both the first group of time units and the second group of time units (that is, determine both the receive beam and the transmit beam) by using the signal quality information of the M first signals sent in the N groups of time units. Therefore, the first communication apparatus may not send the first information, or the first communication apparatus may send null information in the first information. In this manner, beam management overheads can be reduced.

In a possible implementation of the first aspect, X is less than N, the N groups of time units include X groups of time units, and the X groups of time units include the second group of time units and/or time units adjacent to the second group of time units; and that the i^{th} group of time domain resources in the M groups of time domain resources is the feedback resources for the i^{th} first signal in the M first signals includes: a j^{th} resource in X resources included in the i^{th} group of time domain resources in the M groups of time domain resources is a feedback resource for the i^{th} first signal in the M first signals in a j^{th} group of resources in X groups of resources, and j is a positive integer less than or equal to X.

Optionally, a value of X may be configured or preconfigured, and represents a range in which optimal receive and transmit beams exist. For example, when the N beams include seven beams (which are respectively a beam #y, a beam #y+1, a beam #y+2, a beam #y+3, a beam #y+4, a beam #y+5, and a beam #y+6, where y is a natural number), beams with a relatively small difference (for example, 1 or 2) between index values may be considered as adjacent beams. If the second communication apparatus determines, based on signal received quality of the M first signals received in the N groups of time units, that the optimal receive beam is the beam #y+3 (that is, the second group of time units corresponds to the beam #y+3), when the value of X is 3, the optimal transmit beam may be one of the beam #y+2, the beam #y+3, and the beam #y+4; or when the value of X is 5, the optimal transmit beam may be one of the beam #y+1, the beam #y+2, the beam #y+3, the beam #y+4, and the beam #y+5.

Based on the foregoing technical solution, X may be less than or equal to N. When X is less than N, the X groups of time units are some of the N groups of time units. Correspondingly, the X groups of time units may include a time unit corresponding to the receive beam of the second communication apparatus and/or time units adjacent to the time unit corresponding to the receive beam of the second communication apparatus. In addition, the M groups of time domain resources used to carry the M groups of second signals may be implemented in the foregoing manner. To be specific, the second communication apparatus serves as a signal receiver of the M first signals, and a transmit beam of the signal transmitter may be determined based on a relatively small quantity of groups of time units by using a resource configuration manner of a feedback resource corresponding to a signal sent by the signal transmitter, to reduce overheads.

In a possible implementation of the first aspect, signal quality information of the M groups of second signals is used to determine a fourth signal in the M second signals.

Based on the foregoing technical solution, the first communication apparatus serves as a receiver of the M groups of second signals, and the first communication apparatus may respectively receive the M groups of second signals based on M beams. Then, the first communication apparatus may determine the signal quality information of the M groups of second signals, determine a second signal corresponding to signal quality information with highest signal quality as the fourth signal, and determine a beam corresponding to the fourth signal as a receive beam (or an optimal receive beam) of the first communication apparatus. In other words, the first communication apparatus may determine the receive beam (or the optimal receive beam) of the first communication apparatus based on the signal quality information of the M groups of second signals, and subsequently may receive a signal/information/data based on the receive beam, to improve receiving quality in the receiving process.

Optionally, when a receive beam and a transmit beam of the first communication apparatus are different, the third signal in the M first signals is different from the fourth signal.

Optionally, when a receive beam and a transmit beam of the first communication apparatus are the same, the third signal in the M first signals is the same as the fourth signal.

In a possible implementation of the first aspect, an i^{th} group of second signals in the M groups of second signals is used to carry an i^{th} group of signal quality information in M groups of signal quality information; and the i^{th} group of signal quality information in the M groups of signal quality information indicates signal quality of the i^{th} first signal in the M first signals, and a signal corresponding to signal quality information with highest signal quality in the M groups of signal quality information is the third signal.

Based on the foregoing technical solution, information carried in the M groups of second signals may be specifically the signal quality information corresponding to the M first signals, so that the first communication apparatus can determine the third signal in the M first signals by using the signal quality information of the M first signals received by the second communication apparatus. Therefore, in a manner of feeding back the signal quality information by the second communication apparatus, the first communication apparatus may determine the third signal in the M first signals, that is, the first communication apparatus may determine a transmit beam (or an optimal transmit beam) in the M beams.

In a possible implementation of the first aspect, in the M groups of signal quality information, each group of signal quality information includes X pieces of signal quality information, where X pieces of signal quality information included in the i^{th} group of signal quality information in the M groups of signal quality information are carried in the X resources included in the i^{th} group of time domain resources in the M groups of time domain resources.

It should be understood that X may be less than or equal to N. When X is equal to N, the foregoing implementation may be expressed as follows: N pieces of signal quality information included in the i^{th} group of signal quality information in the M groups of signal quality information are carried in the N resources included in the i^{th} group of time domain resources in the M groups of time domain resources.

Based on the foregoing technical solution, in the M groups of signal quality information sent by the second communication apparatus, each group of signal quality information may include X pieces of signal quality information corresponding to signals carried in X resources. Implementation complexity of the second communication apparatus can be reduced by feeding back an actual measurement value by the second communication apparatus.

Optionally, in the M groups of signal quality information, when each group of signal quality information includes X pieces of signal quality information, X pieces of signal quality information in different groups may be implemented in a plurality of manners.

For example, in the M groups of signal quality information, X pieces of signal quality information included in the i^{th} group of signal quality information are the same. Therefore, in a manner of feeding back the same signal quality information in the X time units, implementation complexity of identifying, by using the M groups of signal quality information, signal quality information with highest signal quality to determine the third signal can be reduced.

For another example, a j^{th} piece of signal quality information in X pieces of signal quality information included in the i^{th} group of signal quality information in the M groups of signal quality information indicates signal quality of the i^{th} first signal in the M first signals in a j^{th} group of time units in X groups of time units included in the N groups of time units, where j is a positive integer less than or equal to X. Therefore, in a manner of feeding back signal quality information of each signal in the X time units, implementation complexity of sending the M groups of signal quality information by the first communication apparatus can be reduced.

In a possible implementation of the first aspect, in the M groups of signal quality information, each group of signal quality information includes one piece of signal quality information, where one piece of signal quality information included in the i^{th} piece of signal quality information in the M pieces of signal quality information is signal quality information with highest signal quality in X pieces of signal quality information of the i^{th} first signal in the M first signals in the X groups of time units included in the N groups of time units.

Based on the foregoing technical solution, in the M groups of signal quality information sent by the second communication apparatus, each group of signal quality information may include one piece of signal quality information with highest signal quality. In a manner in which the second communication apparatus feeds back a highest measurement value obtained through screening, implementation complexity of performing identification by the first communication apparatus in different signal quality information to determine the third signal can be reduced.

Optionally, the channel quality information may be mapped to different code domains for feedback in a quantization manner. For example, when a PSFCH is used to carry signal quality information (for example, the M groups of signal quality information, and X pieces of signal quality information that may appear below), quantized signal quality information may be carried by using a cyclic shift (Cyclic shift). For example, when the signal quality information is RSRP, the RSRP is divided in a range of [-30, -0] dBm. A sequence 1 "1 0 0 0 0" represents [-30, -20], a sequence 2 "0 1 0 0 0" represents [-20, -10], and a sequence 3 "0 0 1 0 0" represents [-10, 0]. Correspondingly, when an RSRP value of a received signal is -27.538 dBm, the sequence 2 is used for representation, and the sequence 2 is fed back by using a PSFCH. In this manner of feeding back quantized information, implementation complexity can be reduced.

In a possible implementation of the first aspect, an i^{th} group of second signals in the M groups of second signals is used to carry an i^{th} group of acknowledgement information in M groups of acknowledgement information; and the i^{th} group of acknowledgement information in the M groups of acknowledgement information indicates that acknowledgement for the i^{th} first signal in the M first signals is acknowledgement or negative acknowledgement, and a signal corresponding to a group of acknowledgement information indicating acknowledgement in the M groups of acknowledgement information is the first signal.

Based on the foregoing technical solution, information carried in the M groups of second signals may be specifically the acknowledgement information corresponding to the M first signals, so that the first communication apparatus can determine the third signal in the M first signals by using the acknowledgement information of the M first signals received by the second communication apparatus. Therefore, in a manner of feeding back the acknowledgement information by the second communication apparatus, the first communication apparatus may determine the third signal in the M first signals, that is, the first communication apparatus may determine a transmit beam (or an optimal transmit beam) in the M beams.

In a possible implementation of the first aspect, in the M groups of acknowledgement information, each group of acknowledgement information includes X pieces of acknowledgement information, where X pieces of acknowledgement information included in the i^{th} group of acknowledgement information in the M groups of acknowledgement information are carried in the X resources included in the i^{th} group of time domain resources in the M groups of time domain resources.

Based on the foregoing technical solution, in the M groups of acknowledgement information sent by the second communication apparatus, each group of acknowledgement information may include X pieces of acknowledgement information corresponding to signals carried in X resources. Implementation complexity of the second communication apparatus can be reduced by feeding back acknowledgement information corresponding to each first signal by the second communication apparatus.

Optionally, in the M groups of acknowledgement information, X pieces of acknowledgement information included in the i^{th} group of acknowledgement information are all acknowledgement or negative acknowledgement. Therefore, in a manner in which the second communication apparatus feeds back acknowledgement information obtained through screening, implementation complexity of performing identification by the first communication apparatus in different acknowledgement information to determine the third signal can be reduced.

In a possible implementation of the first aspect, in the M groups of acknowledgement information, each group of acknowledgement information includes one piece of acknowledgement information.

Based on the foregoing technical solution, in the M groups of acknowledgement information sent by the second communication apparatus, each group of acknowledgement information may include one piece of acknowledgement information. In a manner in which the second communication apparatus feeds back acknowledgement information obtained through screening, implementation complexity of performing identification by the first communication apparatus in different signal quality information to determine the third signal can be reduced.

In a possible implementation of the first aspect, the M groups of time domain resources include a first group of time domain resources, the first group of time domain resources is feedback resources for the third signal, the first information is carried in a second group of time domain resources, and the second group of time domain resources is feedback resources for the first group of time domain resources.

Based on the foregoing technical solution, after the first communication apparatus sends the M first signals, the first communication apparatus may receive the M groups of second signals on the feedback resources (that is, the M groups of time domain resources) corresponding to the M first signals. Correspondingly, after the first communication apparatus determines the third signal, the first communication apparatus may determine, in the M groups of time domain resources, that the feedback resources for the third signal are the first group of time domain resources. Then, the first communication apparatus may send the first information on the feedback resources (namely, the second group of time domain resources) for the first group of time domain resources, so that the second communication apparatus can receive the first information on the second group of time domain resources, and subsequently can further determine the first group of time units in the N groups of time units based on the first information.

Optionally, for the first communication apparatus and/or the second communication apparatus, the second group of time domain resources may be determined in a plurality of manners, for example, preconfigured in a protocol/standard, configured by a network device, or predefined.

In a possible implementation of the first aspect, the second group of time domain resources includes X time domain units, a j^{th} time domain unit in X time domain units included in the second group of time domain resources is a feedback resource for a j^{th} resource in X resources included in the first group of time domain resources, and j is a positive integer less than or equal to X.

Based on the foregoing technical solution, the second group of time domain resources is feedback resources for the first group of time domain resources. Correspondingly, the second group of time domain resources may include X time domain units, so that the first communication apparatus may send the first information on some or all of the X time domain units. In other words, the second communication apparatus may receive the first information on some or all of the X time domain units. The second communication apparatus serves as a signal receiver of the M first signals. In this resource configuration manner, a transmit beam (or an optimal transmit beam) of the signal receiver can be determined.

In a possible implementation of the first aspect, the first information includes X pieces of signal quality information, and the j^{th} time domain unit in the X time domain units is used to carry a j^{th} piece of signal quality information in the X pieces of signal quality information, where the j^{th} piece of signal quality information in the X pieces of signal quality information indicates signal quality of a signal carried in a j^{th} time unit in the X resources included in the first group of time domain resources, a time unit for signal quality information with highest signal quality in the X pieces of signal quality information corresponds to the first group of time units, and j is a positive integer less than or equal to X.

Alternatively, the first information includes X pieces of acknowledgement information, and the j^{th} time domain unit in the X time domain units is used to carry a j^{th} piece of acknowledgement information in the X pieces of acknowledgement information, where the j^{th} piece of acknowledgement information in the X pieces of acknowledgement information indicates that acknowledgement for a signal carried in a j^{th} time unit in the X resources included in the first group of time domain resources is acknowledgement or negative acknowledgement, a time unit corresponding to a group of acknowledgement information indicating acknowledgement in the X pieces of acknowledgement information is the first group of time units, and j is a positive integer less than or equal to X.

Based on the foregoing technical solution, the second group of time domain resources is feedback resources for the first group of time domain resources, and X time domain units included in the second group of time domain resources may carry X pieces of signal quality information (or X pieces of acknowledgement information), so that the second communication apparatus can determine the first group of time units based on the X pieces of signal quality information (or the X pieces of acknowledgement information), that is, determine a transmit beam (or an optimal transmit beam) of the second communication apparatus.

In a possible implementation of the first aspect, the first information includes one piece of signal quality information or one piece of acknowledgement information, and one of the X time domain units is used to carry the one piece of signal quality information or the one piece of acknowledgement information, where the one time domain unit corresponds to the first group of time units.

Based on the foregoing technical solution, the second group of time domain resources is feedback resources for the first group of time domain resources, and X time domain units included in the second group of time domain resources may carry one piece of signal quality information (or one piece of acknowledgement information), so that the second communication apparatus can determine the first group of time units based on the one piece of signal quality information (or the one piece of acknowledgement information), that is, determine a transmit beam (or an optimal transmit beam) of the second communication apparatus, and overheads can also be reduced.

In a possible implementation of the first aspect, the first information includes an index of the first group of time units.

Based on the foregoing technical solution, the second group of time domain resources is feedback resources for the first group of time domain resources. The first information carried in the second group of time domain resources may include the index of the first group of time units, so that the second communication apparatus can determine the first group of time units in the N groups of time units based on the index, to reduce implementation complexity of the second communication apparatus.

A second aspect of this application provides a communication method. The method is performed by a second communication apparatus. The second communication apparatus may be a communication device (such as a terminal device), or the second communication apparatus may be some components (such as a processor, a chip, or a chip system) in a communication device, or the second communication apparatus may be a logical module or software that can implement all or some functions of a communication device. In the method, the second communication apparatus receives M first signals in each of N groups of time units, where the M first signals are respectively carried in M time units in each group of time units, and both N and M are integers greater than 1; the second communication apparatus sends M groups of second signals, where the M groups of second signals are used to determine a third signal in the M second signals, the M groups of second signals are carried in M groups of time domain resources, the M groups of time domain resources are respectively feedback resources for the M first signals, each of the M groups of time domain resources includes X resources, i is a positive integer less than or equal to M, and X is a positive integer less than or equal to N; and the second communication apparatus receives first information, where the first information is used to determine a first group of time units in the N groups of time units.

Based on the foregoing technical solution, after the second communication apparatus receives the M signals in each of the N groups of time units through N communication beams, the second communication apparatus may send the M groups of second signals, so that the first communication apparatus determines the third signal in the M first signals based on the M groups of second signals. In other words, the first communication apparatus may determine, based on the third signal, a transmit beam corresponding to the third signal, and subsequently, the first communication apparatus may send a signal/data/information or the like based on the transmit beam. The i^{th} group of second signals in the M groups of second signals is carried in the i^{th} group of time domain resources in the M groups of time domain resources, the i^{th} group of time domain resources in the M groups of time domain resources is the feedback resources for the i^{th} first signal in the M first signals. In other words, in addition to determining the third signal by using information carried in the M groups of second signals, the first communication apparatus may further determine a transmit beam (or an optimal transmit beam) of the first communication apparatus based on a feedback resource corresponding to the third signal. Therefore, the first communication apparatus serves as a signal transmitter of the M first signals, and a transmit beam of the signal transmitter may be determined by using a resource configuration manner of a feedback resource corresponding to a signal sent by the signal transmitter, to implement beam management.

In addition, the second communication apparatus may further receive the first information, so that the second communication apparatus determines the first group of time units in the N groups of time units based on the first information. In other words, a transmit beam (or an optimal transmit beam) of the signal receiver may be determined by using the first information sent by the signal transmitter, to implement beam management.

In a possible implementation of the second aspect, signal quality information of the M first signals sent in the N groups of time units is used to determine a second group of time units in the N groups of time units.

Based on the foregoing technical solution, the second communication apparatus serves as a receiver of the M first signals, and the second communication apparatus may respectively use N beams for reception in the N groups of time units. Then, the second communication apparatus may determine signal quality information respectively corresponding to the N groups of time units, determine a time unit corresponding to signal quality information with highest signal quality as the second group of time units, and determine a beam corresponding to the second group of time units as a receive beam (or an optimal receive beam) of the second communication apparatus. In other words, the second communication apparatus may determine the receive beam (or the optimal receive beam) of the second communication apparatus based on the signal quality information of the M first signals sent in the N groups of time units, and subsequently may receive a signal/information/data based on the receive beam, to improve receiving quality in the receiving process.

Optionally, when a receive beam and a transmit beam of the second communication apparatus are different, the second group of time units in the N groups of time units is different from the first group of time units.

Optionally, when a receive beam and a transmit beam of the second communication apparatus are the same, the second group of time units in the N groups of time units is the same as the first group of time units. The second communication apparatus may determine both the first group of time units and the second group of time units (that is, determine both the receive beam and the transmit beam) by using the signal quality information of the M first signals sent in the N groups of time units. Therefore, the second communication apparatus may not receive the first information, or the second communication apparatus may receive null information in the first information. In this manner, beam management overheads can be reduced.

In a possible implementation of the second aspect, X is less than N, the N groups of time units include X groups of time units, and the X groups of time units include the second group of time units and/or time units adjacent to the second group of time units; and that the i^{th} group of time domain resources in the M groups of time domain resources is the feedback resources for the i^{th} first signal in the M first signals includes: a j^{th} resource in X resources included in the i^{th} group of time domain resources in the M groups of time domain resources is a feedback resource for the i^{th} first signal in the M first signals in a j^{th} group of resources in X groups of resources, and j is a positive integer less than or equal to X.

Optionally, a value of X may be configured or preconfigured, and represents a range in which optimal receive and transmit beams exist. For example, when the N beams include seven beams (which are respectively a beam #y, a beam #y+1, a beam #y+2, a beam #y+3, a beam #y+4, a beam #y+6, and a beam #y+6, where y is a natural number), beams with a relatively small difference (for example, 1 or 2) between index values may be considered as adjacent beams. If the second communication apparatus determines, based on signal received quality of the M first signals received in the N groups of time units, that the optimal receive beam is the beam #y+3 (that is, the second group of time units corresponds to the beam #y+3), when the value of X is 3, the optimal transmit beam may be one of the beam #y+2, the beam #y+3, and the beam #y+4; or when the value of X is 5, the optimal transmit beam may be one of the beam #y+1, the beam #y+2, the beam #y+3, the beam #y+4, and the beam #y+5.

Based on the foregoing technical solution, when X is less than N, the X groups of time units are some of the N groups of time units. Correspondingly, the X groups of time units may include a time unit corresponding to the receive beam of the second communication apparatus and/or time units adjacent to the time unit corresponding to the receive beam of the second communication apparatus. In addition, the M groups of time domain resources used to carry the M groups of second signals may be implemented in the foregoing manner. To be specific, the second communication apparatus serves as a signal receiver of the M first signals, and a transmit beam of the signal transmitter may be determined based on a relatively small quantity of groups of time units by using a resource configuration manner of a feedback resource corresponding to a signal sent by the signal transmitter, to reduce overheads.

In a possible implementation of the second aspect, signal quality information of the M groups of second signals is used to determine a fourth signal in the M second signals.

Based on the foregoing technical solution, the first communication apparatus serves as a receiver of the M groups of second signals, and the first communication apparatus may respectively receive the M groups of second signals based on M beams. Then, the first communication apparatus may determine the signal quality information of the M groups of second signals, determine a second signal corresponding to signal quality information with highest signal quality as the fourth signal, and determine a beam corresponding to the fourth signal as a receive beam (or an optimal receive beam) of the first communication apparatus. In other words, the first communication apparatus may determine the receive beam (or the optimal receive beam) of the first communication apparatus based on the signal quality information of the M groups of second signals, and subsequently may receive a signal/information/data based on the receive beam, to improve receiving quality in the receiving process.

In a possible implementation of the second aspect, an i^{th} group of second signals in the M groups of second signals is used to carry an i^{th} group of signal quality information in M groups of signal quality information; and the i^{th} group of signal quality information in the M groups of signal quality information indicates signal quality of the i^{th} first signal in the M first signals, and a signal corresponding to signal quality information with highest signal quality in the M groups of signal quality information is the third signal.

Based on the foregoing technical solution, information carried in the M groups of second signals may be specifically the signal quality information corresponding to the M first signals, so that the first communication apparatus can determine the third signal in the M first signals by using the signal quality information of the M first signals received by the second communication apparatus. Therefore, in a manner of feeding back the signal quality information by the second communication apparatus, the first communication apparatus may determine the third signal in the M first signals, that is, the first communication apparatus may determine a transmit beam (or an optimal transmit beam) in the M beams.

In a possible implementation of the second aspect, in the M groups of signal quality information, each group of signal quality information includes X pieces of signal quality information, where X pieces of signal quality information included in the i^{th} group of signal quality information in the M groups of signal quality information are carried in the X resources included in the i^{th} group of time domain resources in the M groups of time domain resources.

It should be understood that X may be less than or equal to N. When X is equal to N, the foregoing implementation may be expressed as follows: N pieces of signal quality information included in the i^{th} group of signal quality information in the M groups of signal quality information are carried in the N resources included in the i^{th} group of time domain resources in the M groups of time domain resources.

Based on the foregoing technical solution, in the M groups of signal quality information sent by the second communication apparatus, each group of signal quality information may include X pieces of signal quality information corresponding to signals carried in X resources. Implementation complexity of the second communication apparatus can be reduced by feeding back an actual measurement value by the second communication apparatus.

Optionally, in the M groups of signal quality information, when each group of signal quality information includes X pieces of signal quality information, X pieces of signal quality information in different groups may be implemented in a plurality of manners.

For example, in the M groups of signal quality information, X pieces of signal quality information included in the i^{th} group of signal quality information are the same. Therefore, in a manner of feeding back the same signal quality information in the X time units, implementation complexity of identifying, by using the M groups of signal quality information, signal quality information with highest signal quality to determine the third signal can be improved.

For another example, a j^{th} piece of signal quality information in X pieces of signal quality information included in the i^{th} group of signal quality information in the M groups of signal quality information indicates signal quality of the i^{th} first signal in the M first signals in a j^{th} group of time units in X groups of time units included in the N groups of time units, where j is a positive integer less than or equal to X. Therefore, in a manner of feeding back signal quality information of each signal in the X time units, implementation complexity of sending the M groups of signal quality information by the first communication apparatus can be reduced.

In a possible implementation of the second aspect, in the M groups of signal quality information, each group of signal quality information includes one piece of signal quality information, where one piece of signal quality information included in the i^{th} piece of signal quality information in the M pieces of signal quality information is signal quality information with highest signal quality in X pieces of signal quality information of the i^{th} first signal in the M first signals in the X groups of time units included in the N groups of time units.

Based on the foregoing technical solution, in the M groups of signal quality information sent by the second communication apparatus, each group of signal quality information may include one piece of signal quality information with highest signal quality. In a manner in which the second communication apparatus feeds back a highest measurement value obtained through screening, implementation complexity of performing identification by the first communication apparatus in different signal quality information to determine the third signal can be reduced.

Optionally, the channel quality information may be mapped to different code domains for feedback in a quantization manner. For example, when a PSFCH is used to carry signal quality information (for example, the M groups of signal quality information, and X pieces of signal quality information that may appear below), quantized signal quality information may be carried by using a cyclic shift (Cyclic shift). For example, when the signal quality information is RSRP, the RSRP is divided in a range of [-30, -0] dBm. A sequence 1 "1 0 0 0 0" represents [-30, -20], a sequence 2 "0 1 0 0 0" represents [-20, -10], and a sequence 3 "0 0 1 0 0" represents [-10, 0]. Correspondingly, when an RSRP value of a received signal is -27.538 dBm, the sequence 2 is used for representation, and the sequence 2 is fed back by using a PSFCH. In this manner of feeding back quantized information, implementation complexity can be reduced.

In a possible implementation of the second aspect, an i^{th} group of second signals in the M groups of second signals is used to carry an i^{th} group of acknowledgement information in M groups of acknowledgement information; and the i^{th} group of acknowledgement information in the M groups of acknowledgement information indicates that acknowledgement for the i^{th} first signal in the M first signals is acknowledgement or negative acknowledgement, and a signal corresponding to a group of acknowledgement information indicating acknowledgement in the M groups of acknowledgement information is the first signal.

Based on the foregoing technical solution, information carried in the M groups of second signals may be specifically the acknowledgement information corresponding to the M first signals, so that the first communication apparatus can determine the third signal in the M first signals by using the acknowledgement information of the M first signals received by the second communication apparatus. Therefore, in a manner of feeding back the acknowledgement information by the second communication apparatus, the first communication apparatus may determine the third signal in the M first signals, that is, the first communication apparatus may determine a transmit beam (or an optimal transmit beam) in the M beams.

In a possible implementation of the second aspect, in the M groups of acknowledgement information, each group of acknowledgement information includes X pieces of acknowledgement information, where X pieces of acknowledgement information included in the i^{th} group of acknowledgement information in the M groups of acknowledgement information are carried in the X resources included in the i^{th} group of time domain resources in the M groups of time domain resources.

Based on the foregoing technical solution, in the M groups of acknowledgement information sent by the second communication apparatus, each group of acknowledgement information may include X pieces of acknowledgement information corresponding to signals carried in X resources. Implementation complexity of the second communication apparatus can be reduced by feeding back acknowledgement information corresponding to each first signal by the second communication apparatus.

Optionally, in the M groups of acknowledgement information, X pieces of acknowledgement information included in the i^{th} group of acknowledgement information are all acknowledgement or negative acknowledgement. Therefore, in a manner in which the second communication apparatus feeds back acknowledgement information obtained through screening, implementation complexity of performing identification by the first communication apparatus in different acknowledgement information to determine the third signal can be reduced.

In a possible implementation of the second aspect, in the M groups of acknowledgement information, each group of acknowledgement information includes one piece of acknowledgement information.

Based on the foregoing technical solution, in the M groups of acknowledgement information sent by the second communication apparatus, each group of acknowledgement information may include one piece of acknowledgement information. In a manner in which the second communication apparatus feeds back acknowledgement information obtained through screening, implementation complexity of performing identification by the first communication apparatus in different signal quality information to determine the third signal can be reduced.

In a possible implementation of the second aspect, the M groups of time domain resources include a first group of time domain resources, the first group of time domain resources is feedback resources for the third signal, the first information is carried in a second group of time domain resources, and the second group of time domain resources is feedback resources for the first group of time domain resources.

Based on the foregoing technical solution, after the first communication apparatus sends the M first signals, the first communication apparatus may receive the M groups of second signals on the feedback resources (that is, the M groups of time domain resources) corresponding to the M first signals. Correspondingly, after the first communication apparatus determines the third signal, the first communication apparatus may determine, in the M groups of time domain resources, that the feedback resources for the third signal are the first group of time domain resources. Then, the first communication apparatus may send the first information on the feedback resources (namely, the second group of time domain resources) for the first group of time domain resources, so that the second communication apparatus can receive the first information on the second group of time domain resources, and subsequently can further determine the first group of time units in the N groups of time units based on the first information.

In a possible implementation of the second aspect, the second group of time domain resources includes X time domain units, and a j^{th} time domain unit in X time domain units included in the second group of time domain resources is a feedback resource for a j^{th} resource in X resources included in the first group of time domain resources.

Based on the foregoing technical solution, the second group of time domain resources is feedback resources for the first group of time domain resources. Correspondingly, the second group of time domain resources may include X time domain units, so that the first communication apparatus may send the first information on some or all of the X time domain units. In other words, the second communication apparatus may receive the first information on some or all of the X time domain units. The second communication apparatus serves as a signal receiver of the M first signals. In this resource configuration manner, a transmit beam (or an optimal transmit beam) of the signal receiver can be determined.

In a possible implementation of the second aspect, the first information includes X pieces of signal quality information, and the j^{th} time domain unit in the X time domain units is used to carry a j^{th} piece of signal quality information in the X pieces of signal quality information, where the j^{th} piece of signal quality information in the X pieces of signal quality information indicates signal quality of a signal carried in a j^{th} time unit in the X resources included in the first group of time domain resources, a time unit for signal quality information with highest signal quality in the X pieces of signal quality information corresponds to the first group of time units, and j is a positive integer less than or equal to X.

Alternatively, the first information includes X pieces of acknowledgement information, and the j^{th} time domain unit in the X time domain units is used to carry a j^{th} piece of acknowledgement information in the X pieces of acknowledgement information, where the j^{th} piece of acknowledgement information in the X pieces of acknowledgement information indicates that acknowledgement for a signal carried in a j^{th} time unit in the X resources included in the first group of time domain resources is acknowledgement or negative acknowledgement, a time unit corresponding to a group of acknowledgement information indicating acknowledgement in the X pieces of acknowledgement information is the first group of time units, and j is a positive integer less than or equal to X.

Based on the foregoing technical solution, the second group of time domain resources is feedback resources for the first group of time domain resources, and X time domain units included in the second group of time domain resources may carry X pieces of signal quality information (or X pieces of acknowledgement information), so that the second communication apparatus can determine the first group of time units based on the X pieces of signal quality information (or the X pieces of acknowledgement information), that is, determine a transmit beam (or an optimal transmit beam) of the second communication apparatus.

In a possible implementation of the second aspect, the first information includes one piece of signal quality information or one piece of acknowledgement information, and one of the X time domain units is used to carry the one piece of signal quality information or the one piece of acknowledgement information, where the one time domain unit corresponds to the first group of time units.

Based on the foregoing technical solution, the second group of time domain resources is feedback resources for the first group of time domain resources, and X time domain units included in the second group of time domain resources may carry one piece of signal quality information (or one piece of acknowledgement information), so that the second communication apparatus can determine the first group of time units based on the one piece of signal quality information (or the one piece of acknowledgement information), that is, determine a transmit beam (or an optimal transmit beam) of the second communication apparatus, and overheads can also be reduced.

In a possible implementation of the second aspect, the first information includes an index of the first group of time units.

Based on the foregoing technical solution, the second group of time domain resources is feedback resources for the first group of time domain resources. The first information carried in the second group of time domain resources may include the index of the first group of time units, so that the second communication apparatus can determine the first group of time units in the N groups of time units based on the index, to reduce implementation complexity of the second communication apparatus.

A third aspect of this application provides a communication apparatus. The apparatus is a first communication apparatus, and the apparatus includes a transceiver unit and a processing unit. The transceiver unit is configured to send M first signals in each of N groups of time units, where the M first signals are respectively carried in M time units in each group of time units, and both N and M are integers greater than 1; the transceiver unit is further configured to receive M groups of second signals, where the M groups of second signals are used to determine a third signal in the M first signals, an i^{th} group of second signals in the M groups of second signals is carried in an i^{th} group of time domain resources in M groups of time domain resources, the i^{th} group of time domain resources in the M groups of time domain resources is feedback resources for an i^{th} first signal in the M first signals, each of the M groups of time domain resources includes X resources, i is a positive integer less than or equal to M, and X is a positive integer less than or equal to N; the processing unit is configured to determine the first information; and the transceiver unit is further configured to send first information, where the first information is used to determine a first group of time units in the N groups of time units.

In the third aspect of this application, the component modules of the communication apparatus may be further configured to: perform the steps performed in the possible implementations of the first aspect, and achieve corresponding technical effects. For details, refer to the first aspect. Details are not described herein again.

A fourth aspect of this application provides a communication apparatus. The apparatus is a second communication apparatus, and the apparatus includes a transceiver unit and a processing unit. The transceiver unit is configured to receive M first signals in each of N groups of time units, where the M first signals are respectively carried in M time units in each group of time units, and both N and M are integers greater than 1; the processing unit is configured to determine M groups of second signals; the transceiver unit is further configured to send the M groups of second signals, where the M groups of second signals are used to determine a third signal in the M second signals, the M groups of second signals are carried in M groups of time domain resources, the M groups of time domain resources are respectively feedback resources for the M first signals, each of the M groups of time domain resources includes X resources, i is a positive integer less than or equal to M, and X is a positive integer less than or equal to N; and the transceiver unit is further configured to receive first information, where the first information is used to determine a first group of time units in the N groups of time units.

In the fourth aspect of this application, the component modules of the communication apparatus may be further configured to: perform the steps performed in the possible implementations of the second aspect, and achieve corresponding technical effects. For details, refer to the second aspect. Details are not described herein again.

A fifth aspect of this application provides a communication apparatus, including at least one processor. The at least one processor is coupled to a memory, the memory is configured to store a program or instructions, and the at least one processor is configured to execute the program or the instructions, to enable the apparatus to implement the method according to any possible implementation in either of the first aspect and the second aspect.

A sixth aspect of this application provides a communication apparatus, including at least one logic circuit and an input/output interface. The logic circuit is configured to perform the method according to any possible implementation in either of the first aspect and the second aspect.

A seventh aspect of this application provides a communication system. The communication system includes the foregoing first communication apparatus and the foregoing second communication apparatus.

An eighth aspect of this application provides a computer-readable storage medium. The storage medium is configured to store one or more computer-executable instructions. When the computer-executable instructions are executed by a processor, the processor performs the method according to any possible implementation in either of the first aspect and the second aspect.

A ninth aspect of this application provides a computer program product (or referred to as a computer program). When the computer program in the computer program product is executed by a processor, the processor performs the method according to any possible implementation in either of the first aspect and the second aspect.

A tenth aspect of this application provides a chip system. The chip system includes at least one processor, configured to support a communication apparatus in implementing the method according to any possible implementation in either of the first aspect and the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design manner in the third aspect to the tenth aspect, refer to technical effects brought by different design manners in the first aspect and the second aspect. Details are not described herein again.

### BRIEF DESCRIPTION OF DRAWINGS

FIG. 1a is a diagram of a communication system according to an embodiment of this application;
FIG. 1b is a diagram of a communication system according to an embodiment of this application;
FIG. 1c is a diagram of a communication system according to an embodiment of this application;
FIG. 2a is a diagram of a communication protocol stack according to an embodiment of this application;
FIG. 2b is another diagram of a communication protocol stack according to an embodiment of this application;
FIG. 3a is a diagram of a communication system according to an embodiment of this application;
FIG. 3b is a diagram of a communication resource of a sidelink according to an embodiment of this application;
FIG. 4a is a diagram of a communication resource of a sidelink according to an embodiment of this application;
FIG. 4b is a diagram of a communication resource of a sidelink according to an embodiment of this application;
FIG. 5a is a diagram of a communication resource of a sidelink according to an embodiment of this application;
FIG. 5b is a diagram of a communication resource of a sidelink according to an embodiment of this application;
FIG. 5c is a diagram of a communication resource of a sidelink according to an embodiment of this application;
FIG. 5d is a diagram of a communication resource of a sidelink according to an embodiment of this application;
FIG. 5e is a diagram of a communication resource of a sidelink according to an embodiment of this application;
FIG. 5f is a diagram of a communication resource of a sidelink according to an embodiment of this application;
FIG. 6 is a diagram of beam management according to an embodiment of this application;
FIG. 7 is a diagram of a communication method according to an embodiment of this application;
FIG. 8 is a diagram of a communication resource of a sidelink according to an embodiment of this application;
FIG. 9 is a diagram of a communication resource of a sidelink according to an embodiment of this application;
FIG. 10a is a diagram of a communication resource of a sidelink according to an embodiment of this application;
FIG. 10b is a diagram of a communication resource of a sidelink according to an embodiment of this application;
FIG. 11a is a diagram of a communication resource of a sidelink according to an embodiment of this application;
FIG. 11b is a diagram of a communication resource of a sidelink according to an embodiment of this application;
FIG. 12 is a diagram of a communication apparatus according to an embodiment of this application;
FIG. 13 is another diagram of a communication apparatus according to an embodiment of this application; and
FIG. 14 is another diagram of a communication apparatus according to an embodiment of this application.

### DESCRIPTION OF EMBODIMENTS

First, some terms in embodiments of this application are explained and described, to facilitate understanding of a person skilled in the art.
1. A terminal device in this application includes a device that provides voice for a user, a device that provides data connectivity for a user, and a device that provides voice and data connectivity for a user, for example, may include a handheld device with a wireless connection function, or a processing device connected to a wireless modem. The terminal device may also be briefly referred to as a terminal. The terminal may communicate with a core network through a radio access network (radio access network, RAN), and exchange voice or data with the RAN, or exchange voice and data with the RAN. The terminal may include user equipment (user equipment, UE), a wireless terminal, a mobile terminal, a device-to-device (device-to-device, D2D) communication terminal, a vehicle-to-everything (vehicle-to-everything, V2X) terminal, a roadside unit (roadside unit, RSU), a machine-to-machine/machine type communication (machine-to-machine/machine type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal may include a mobile phone (or referred to as a "cellular" phone), a computer having a mobile terminal, a portable, pocket-sized, handheld, or computer built-in mobile apparatus, or the like. The terminal may include a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal may alternatively include a limited device, a device with relatively low power consumption, a device with a limited storage capability, a device with a limited computing capability, or the like. The terminal may include an information sensing device such as a barcode, radio frequency identification (radio frequency identification, RFID), a sensor, a global positioning system (global positioning system, GPS), or a laser scanner.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands, smart helmets, or smart jewelry for monitoring physical signs.

If the various terminals described above are located on a vehicle, for example, placed in the vehicle or installed in the vehicle, the terminals may all be considered as vehicle-mounted terminals. For example, the vehicle-mounted terminals are also referred to as on-board units (on-board unit, OBU).

In embodiments of this application, an apparatus for implementing a function of a terminal may be a terminal, or may be a circuit that can support a terminal in implementing the function, for example, a circuit that can be used in a chip system. The chip system may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement a function of a terminal is a terminal.

2. A network device in this application may include a radio access network (radio access network, RAN) device, for example, a base station (for example, an access point). The network device may be a device that communicates with a terminal device through an air interface in an access network. Alternatively, a network device in a vehicle-to-everything (vehicle-to-everything, V2X) technology is a roadside unit (roadside unit, RSU). The base station may be configured to perform mutual conversion between a received over-the-air frame and an IP packet, and serve as a router between the terminal and a remaining part of the access network. The remaining part of the access network may include an IP network. The RSU may be a fixed infrastructure entity supporting a V2X application, and exchanges a message with another entity supporting the V2X application. The network device may further coordinate attribute management of the air interface. For example, the network device may include an evolved NodeB (evolved NodeB, NodeB, eNB, or e-NodeB) in a long term evolution (long term evolution, LTE) system or a long term evolution-advanced (long term evolution-advanced, LTE-A) system, or may include a next generation NodeB (next generation NodeB, gNB) in an evolved packet core (evolved packet core, EPC) network, a 5th generation (5th generation, 5G) communication technology, or a new radio (new radio, NR) system (also referred to as an NR system), or may include a central unit (central unit, CU) and a distributed unit (distributed unit, DU) in a cloud access network (cloud radio access network, Cloud RAN) system. This is not limited in embodiments of this application. The network device may further include a core network device, and the core network device includes, for example, an access and mobility management function (access and mobility management function, AMF). It should be noted that the RSU may be a network RSU or a terminal device RSU. When the RSU serves as a network RSU, the RSU performs a function of a network device. When the RSU serves as a terminal device RSU, the RSU performs a function of a terminal device.

The network device can send configuration information (for example, carried in a scheduling message and/or an indication message) to the terminal device. The terminal device further performs network configuration based on the configuration information, so that network configurations of the network device and the terminal device are aligned. Alternatively, through a network configuration preset in the network device and a network configuration preset in the terminal device, network configurations of the network device and the terminal device are aligned. Specifically, "align" means that when there is an interaction message between the network device and the terminal device, the network device and the terminal device have a consistent understanding for a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. Neither of a specific technology and a specific device form used by the network device is limited in embodiments of this application. For ease of description, this is not limited in embodiments of this application.

The network device may further include a core network device. The core network device includes, for example, an AMF, a user plane function (user plane function, UPF), or a session management function (session management function, SMF).

In embodiments of this application, an apparatus configured to implement a function of a network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement a function of a network device is a network device.

### 3. Sidelink (sidelink, SL)

Sidelink communication may be performed between terminal devices. In other words, direct communication may be performed between the terminal devices without forwarding by a network device. In this case, a link through which the terminal devices are directly connected to each other is referred to as a sidelink.

Generally, in a sidelink technology, the terminal devices may perform direct information connection through a PC5 interface between the terminal devices. In this application, the sidelink may be represented by using English "Sidelink", or may be represented by using "side link". "Sidelink" and "side link" have a same meaning, and both are English expressions of the sidelink in this application. This technology can provide information exchange not only in a service coverage area of a network device, but also in a place without coverage of the network device. A terminal device that is authorized to perform special communication may use a sidelink communication manner. Certainly, sidelink communication may be used to transmit service data of intelligent transportation, or may be used to transmit a mobile internet service. This is not limited in this application.

### 4. Resource pool (resource pool)

In V2X, a network device may configure a resource pool for SL communication of a V2X terminal device, and the resource pool is a set of time-frequency resources. Two resource allocation modes are defined in V2X.

Mode 1 (mode 1): The network device schedules or configures a sidelink resource for the terminal device to perform sidelink transmission.

Mode 2 (mode 2): The terminal device autonomously selects a resource.

Optionally, in an implementation of the mode 2 (mode 2), the terminal device senses, in the (pre)configured resource pool, resources that are not used by other terminal devices, and selects an appropriate quantity of such resources for transmission of the terminal device. V2X supports a resource sensing (sensing) process and a resource selection or reselection process in the mode 2. In the sensing process, SCI information of another terminal device or another sidelink measurement result may be further demodulated, and the demodulated SCI information reflects resource usage on the sidelink. In the resource selection or reselection process, a resource used for sidelink transmission may be determined based on a result of the sensing process.

5. The technical solutions in embodiments of this application may be applied to various communication systems, for example, an LTE system, a worldwide interoperability for microwave access (worldwide interoperability for microwave access, WiMAX) communication system, a 5th generation (5th generation, 5G) system such as NR, and a future communication system such as a 6G system.

### 6. Configuration and preconfiguration

In this application, both the configuration and the preconfiguration are used. The configuration means that a network device or a server sends configuration information of some parameters or values of parameters to a terminal by using a message or signaling, so that the terminal determines a parameter for communication or a resource for transmission based on the values or the information. The preconfiguration is similar to the configuration. The preconfiguration may be a manner in which a network device or a server sends parameter information or values to a terminal through a carrier or another link different from a sidelink; or may be a manner in which a corresponding parameter or parameter value is defined, or a related parameter or value is written into a terminal device in advance. This is not limited in this application. Further, the values and parameters may be changed or updated.

7. Terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

### 8. Beam

A beam (beam) and a beam pair (beam pair link, BPL) are introduced into a communication system. The beam is a communication resource. Beams may be classified into transmit beams and receive beams. A technology for forming the beam may be a beamforming technology or another technical means. Beamforming includes transmit beamforming and receive beamforming.

Transmit beam: is a beam that has a spatial directivity and that is formed by a signal sent by a transmitter device by using a specific beamforming weight. In an uplink direction, the transmitter device may be a terminal. In a downlink direction, the transmitter device may be a network device.

Receive beam: is a beam that has a spatial directivity and that is formed by a signal received by a receiver device by using a specific beamforming weight. In an uplink direction, the receiver device may be a network device. In a downlink direction, the receiver device may be a terminal.

Transmit beamforming: When a transmitter device with an antenna array sends a signal, a specific amplitude and phase are set on each antenna element of the antenna array, so that the sent signal has a specific spatial directivity, that is, the signal has high power in some directions, and has low power in some directions. A direction with highest signal power is a direction of a transmit beam. The antenna array includes a plurality of antenna elements. The additional specific amplitude and phase are a beamforming weight.

Receive beamforming: When a receiver device with an antenna array receives a signal, a specific amplitude and phase are set on each antenna element of the antenna array, so that a power gain of the received signal is directional, that is, a power gain is high when signals in some directions are received, and a power gain is low when signals in some directions are received. A direction with a highest power gain when the signal is received is a direction of a receive beam. The antenna array includes a plurality of antenna elements. The additional specific amplitude and phase are a beamforming weight.

Optionally, sending a signal by using a transmit beam may be understood as sending the signal by using a beamforming weight.

Optionally, receiving a signal by using a receive beam may be understood as receiving the signal by using a beamforming weight.

Optionally, different beams may be considered as different resources. Same information or different information may be sent by using (or through) different beams. The beam pair is established based on the concept of the beam. One beam pair usually includes one transmit beam of a transmitter device and one receive beam of a receiver device. It should be noted that in the following description, unless otherwise specified, a transmit beam is a transmit beam of a network device, and a receive beam is a receive beam of a terminal.

9. "Sending" and "receiving" in embodiments of this application represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY via another unit or module through an air interface. "Sending" may alternatively be understood as "outputting" of a chip interface, and "receiving" may alternatively be understood as "inputting" of the chip interface.

In other words, sending and receiving may be performed between devices, for example, between a network device and a terminal device, or may be performed within a device. For example, sending or receiving is performed between components, modules, chips, software modules, or hardware modules in a device by using a bus, a cable, or an interface.

It may be understood that necessary processing, for example, encoding and modulation, may be performed on information between a source end and a destination end of information sending, but the destination end may understand valid information from the source end. Similar expressions in this application may be understood similarly. Details are not described again.

10. In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining the to-be-indicated information.

It should be noted that, in this application, words such as "example" or "for example" are used to represent giving examples, illustrations, or descriptions. Any embodiment or design solution described as "example" or "for example" in this application should not be construed as being more preferred or advantageous than other embodiments or design solutions. Specifically, the words such as "example" or "for example" are used to present related concepts in a specific manner.

It should be understood that, in this application, both "when" and "if" mean that an apparatus performs corresponding processing in an objective case, are not intended to limit time, and do not require a necessary determining action during implementation of the apparatus, or do not mean that there is another limitation.

In this application, unless otherwise specified, for same or similar parts of the embodiments or implementations, refer to each other. In embodiments of this application and the implementations/implementation methods in the embodiments, unless otherwise specified or unless a logical conflict occurs, terms and/or descriptions are consistent and may be mutually referenced between different embodiments and between the implementations/implementation methods in the embodiments. Technical features in the different embodiments and the implementations/implementation methods in the embodiments may be combined to form a new embodiment, implementation, or implementation method based on an internal logical relationship thereof. The following implementations of this application are not intended to limit the protection scope of this application.

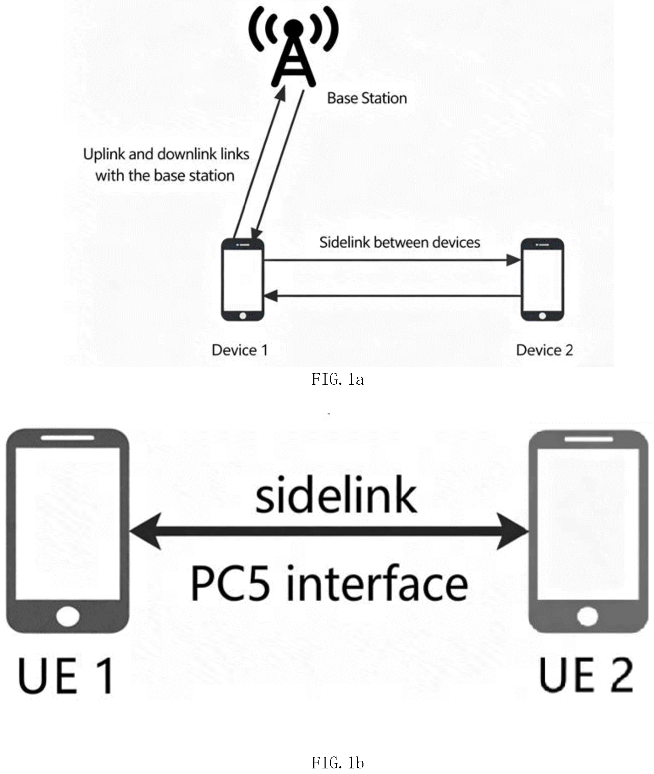

FIG. 1a is a diagram of a communication system according to an embodiment of this application. In FIG. 1a, an example in which a network device is a base station is used for description, and both a device 1 and a device 2 are terminal devices. As shown in FIG. 1a, a communication link between the device 1 and the device 2 may be referred to as a sidelink (sidelink, SL), and a communication link between the device 1 (or the device 2) and the base station may be referred to as an uplink-downlink, including an uplink (uplink) and a downlink (downlink). It can be learned that the sidelink is a communication mechanism in which different terminal devices directly communicate with each other without the network device.

Optionally, on the sidelink (sidelink, SL), generally, a transmit device and a receive device may be terminal devices or network devices of a same type, or may be a road side station (road side unit, RSU) and a terminal device. From a perspective of a physical entity, the RSU is a road side station or a road side unit. From a perspective of a function, the RSU may be a terminal device, or may be a network device. This is not limited in this application. In other words, the transmit device is a terminal device, and the receive device is also a terminal device; or the transmit device is a road side station, and the receive device is a terminal device; or the transmit device is a terminal device, and the receive device is a road side station. In addition, the sidelink may alternatively be a link between base station devices of a same type or different types. In this case, a function of the sidelink is similar to that of a trunk link, but an air interface technology used by the sidelink may be the same as or different from that used by the trunk link.

For example, broadcast, unicast, and multicast are supported on the sidelink.

Broadcast communication is similar to broadcasting system information by the network device. To be specific, the terminal device sends data of a broadcast service to the outside without encryption. Any other terminal device within an effective receiving range may receive the data of the broadcast service if the terminal device is interested in the broadcast service.

Unicast communication is similar to data communication performed after an RRC connection is established between the terminal device and the network device, and a unicast connection needs to be first established between two terminal devices. After the unicast connection is established, the two terminal devices may perform data communication based on a negotiated identifier. The data may or may not be encrypted. In comparison with the broadcast, in the unicast communication, the unicast communication can be performed only between the two terminal devices that have established the unicast connection.

Optionally, one unicast communication on the sidelink corresponds to a pair of a source layer-2 identifier (source layer-2 identifier, denoted as a source L2 ID) and a destination layer-2 identifier (destination Layer-2 Identifier, denoted as a destination L2 ID). Optionally, a subheader of a media access control protocol data unit (media access control protocol data unit, MAC PDU) on the sidelink includes the source L2 ID and the destination L2 ID, so that data is transmitted to a correct receiver.

Multicast communication is communication between all terminal devices in a communication group, and any terminal device in the group can receive and send data of a multicast service.

As shown in FIG. 1b, when a terminal device (denoted as UE 1) directly communicates with another terminal device (denoted as UE 2) without using a network device, a communication link between the two terminal devices may be referred to as a sidelink (sidelink). In other words, the two terminal devices communicate with each other through a proximity-based services communication 5 (proximity-based services communication 5, PC5) interface.

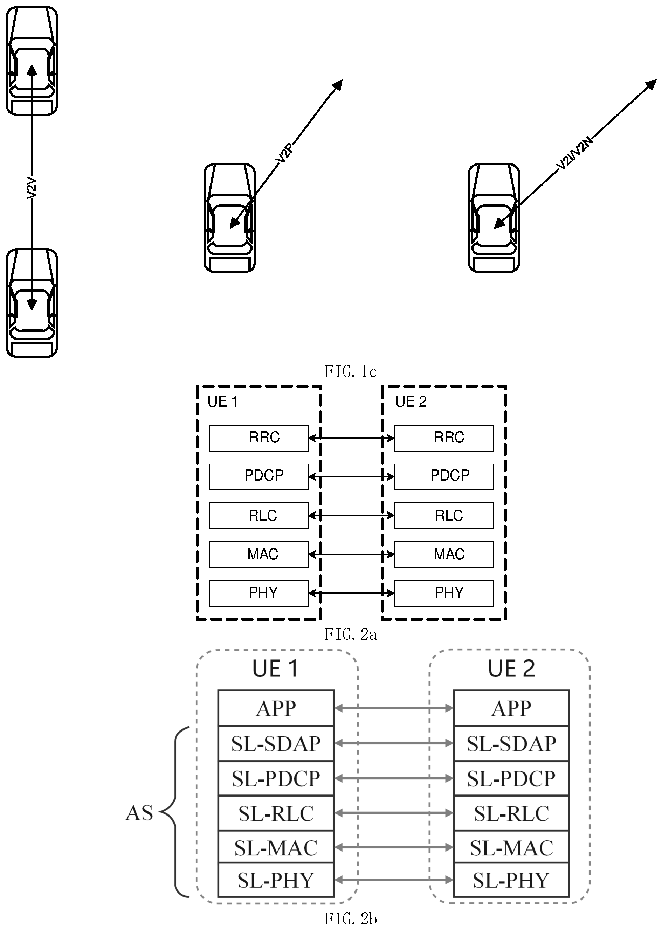

As shown in FIG. 1c, as a typical application of the sidelink, a V2X communication technology uses and enhances current cellular network functions and elements, to implement low-latency and high-reliability communication between various nodes in a vehicle network, including vehicle-to-vehicle (Vehicle-to-Vehicle, V2V for short) communication, vehicle-to-pedestrian (Vehicle-to-Pedestrian, V2P for short) communication, vehicle-to-infrastructure (Vehicle-to-Infrastructure, V2I for short) communication, and vehicle-to-network (Vehicle-to-Network, V2N for short) communication. As a cellular system evolves from 4G long term evolution (Long Term Evolution, LTE for short) to 5G, C-V2X evolves from LTE-V2X to NR-V2X (New Radio V2X, NR-V2X for short).

In addition, V2X communication has great potential in reducing vehicle collision accidents, thereby reducing a corresponding quantity of casualties. Advantages of V2X are not limited to improving safety. A vehicle that can perform V2X communication helps better perform traffic management, and further facilitates green transportation and lower energy consumption. An intelligent transportation system (Intelligent Transportation System, ITS for short) is an application in combination with V2X. Based on a V2X technology, a vehicle user (Vehicle UE, V-UE for short) can send some information such as a position, a speed, and an intent (turning, lane merging, or reversing) of the vehicle user and information triggered by periodic events and some aperiodic events to surrounding V-UE. Similarly, the V-UE also receives information about a surrounding user in real time. 5G NR V2X can support a lower transmission latency, more reliable communication transmission, a higher throughput, and better user experience, and meet requirements of more extensive application scenarios. Further, a vehicle-to-vehicle communication technology supported by V2X may be further applied to device-to-device (Device-to-Device, D2D for short) communication in any system.

In an implementation example, in a process in which the UE 1 and the UE 2 that are shown in FIG. 1b communicate with each other on the sidelink, a structure of a control plane protocol stack is shown in FIG. 2a. In FIG. 2a, interaction of at least one control plane protocol layer such as a radio resource control (radio resource control, RRC) layer, a packet data convergence protocol (packet data convergence protocol, PDCP) layer, a radio link control (radio link control, RLC) layer, a media access control (media access control, MAC) layer, or a physical (physical, PHY) layer is included between the UE 1 and the UE 2.

In an implementation example, in a process in which the UE 1 and the UE 2 that are shown in FIG. 1b communicate with each other on the sidelink, a structure of a user plane protocol stack is shown in FIG. 2b. In FIG. 2b, interaction of at least one user plane protocol layer such as an application (application, APP) layer, a sidelink service data adaptation protocol (sidelink service data adaptation protocol, SL-SDAP) layer, a sidelink packet data convergence protocol (sidelink packet data convergence protocol, SL-PDCP) layer, a sidelink radio link control (sidelink radio link control, SL-RLC) layer, a sidelink media access control (sidelink media access control, SL-RLC) layer, or a sidelink physical (sidelink physical, SL-PHY) layer is included between the UE 1 and the UE 2.

Optionally, in FIG. 2b, the SL-SDAP layer, the SL-PDCP layer, the SL-RLC layer, the SL-RLC layer, the SL-PHY layer, or the like may be referred to as an access stratum (access stratum, AS).

For ease of understanding of the technical solutions provided in this application, the following describes, by using the communication scenario with the uplink-downlink and the sidelink shown in FIG. 1a, a communication technology that may be used in this application.

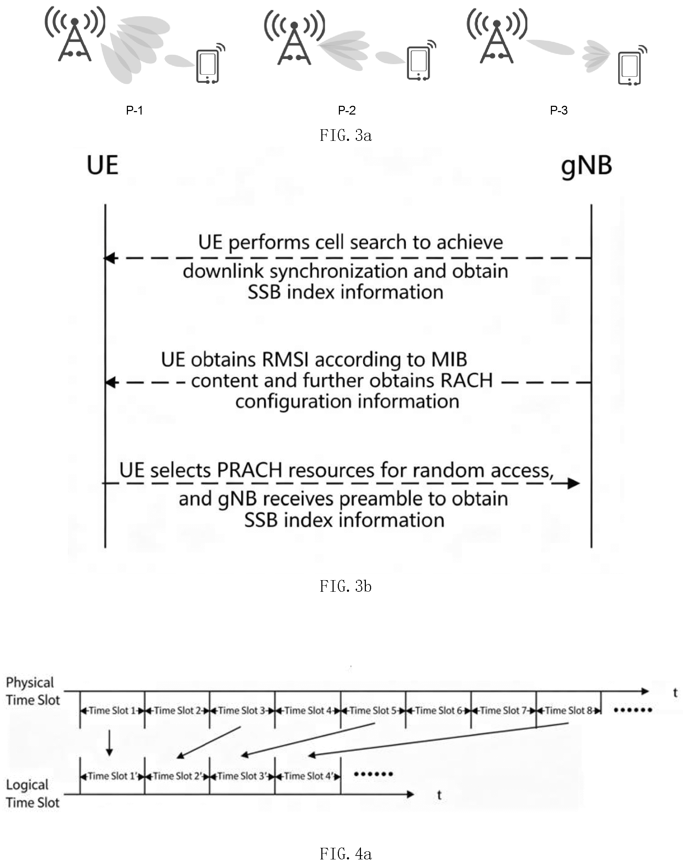

The following implementation processes in FIG. 3a to FIG. 3b mainly relate to uplink-downlink beam management.

Beam management is an important technology in NR, means a process in which a network device and a terminal device obtain and maintain a set of beams used for sending and receiving, and is a reference workflow for beamforming in a multiple-input multiple-output (multi-input multi-output, MIMO) system. For example, the network device is a base station (base station, BS) and the terminal device is UE. In this case, beam management includes the following four technical points:

Beam determination (beam determination): means a process in which the BS or UE selects a transmit or receive beam thereof.

Beam measurement (beam measurement): means a process in which the BS or UE measures a received beamforming signal.

Beam reporting (beam reporting): means a process in which the UE reports a beam measurement result to the base station.

Beam sweeping (beam sweeping): means a process in which the BS or UE sequentially selects, in a specified sweeping manner within a time period, a beam for sending or receiving, to cover a spatial area.

For example, as shown in FIG. 3a, beam management may be classified into three states based on operating situations, and operations of the states are summarized as follows:
P-1: The UE measures a BS transmit beam set, and selects a BS transmit beam and a UE receive beam.
P-2: Based on P-1, the UE measures a smaller BS transmit beam set, to improve a BS transmit beam.
P-3: The UE measures a same BS transmit beam by using different receive beams, to improve a receive beam of the UE.

It may be understood that, downlink beam management is performed based on the four technical points and the operations of the three states, and a basic procedure of downlink beam management is as follows: The BS configures a maximum of 64 beam directions and a time-frequency resource that needs be used by the UE for beam reporting. Each beam direction corresponds to one synchronization signal/physical broadcast channel block (synchronization signal/physical broadcast channel block, SS/PBCH block) (or denoted as an SS/PBCH, an SSB, or the like).

Optionally, in addition to an implementation process of the SSB, in an uplink-downlink communication process, a channel state information reference signal (CSI-RS) may also be used for beam management. The following uses the SSB as an example for description.

The BS sequentially sends an SSB in each direction in a sweeping manner, and the UE performs beam measurement to obtain a reference signal received power (reference signal received power, RSRP) of the SSB. Then, the UE selects an SSB set through RSRP comparison, and reports an SSB sequence number in the set and a corresponding RSRP to the base station on a given time-frequency resource. The base station performs beam determination by using reported information. In this way, an initial beam selection process is completed. A similar procedure is used for uplink beam management, but different reference signals are used.

In NR, when the UE feeds back an optimal transmit beam of the base station, to enable the base station to receive the feedback, the base station needs to receive feedback information by using a corresponding beam that is used to send the SSB. For example, when the base station sends the SSB on a beam 1, beam 2, ..., and beam 8 in a sweeping manner, the UE receives the SSB and determines that the strongest beam used to send the SSB is the beam 2. When the optimal beam is fed back, the base station needs to receive the feedback information on the beam 2 used to send the SSB.

For example, the base station is a gNB. A feedback procedure of the UE is shown in FIG. 3b, and includes the following steps.

Step 1. The UE performs cell search to implement downlink synchronization and obtain SSB index (SSB index) information.

Step 2. The UE obtains remaining minimum system information (remaining minimum system information, RMSI) based on content of a master information block (master information block, MIB), and further obtains random access channel (random access channel, RACH) configuration information.

Step 3. The UE selects a PRACH resource to perform random access, and the gNB receives a preamble (preamble) to obtain the SSB index information.

In the foregoing implementation process, the SSB index (optimal downlink beam) information is carried to the NR base station by using a mapping relationship between an SSB index and a PRACH resource, that is, a time-domain position at which each SSB is sent corresponds to a PRACH resource feedback time-domain position. Therefore, when the UE performs feedback at a PRACH feedback position, the base station may perform receiving by using a corresponding beam used to send the SSB. In addition, NR PRACH time domain positions are flexible, and support selection of different periods (for example, 10/20/40/80/160 ms), frame numbers, subframe numbers, and start symbols. A plurality of configuration options are defined in a protocol. Optionally, one SSB sending slot corresponds to one PRACH sending slot of the UE.

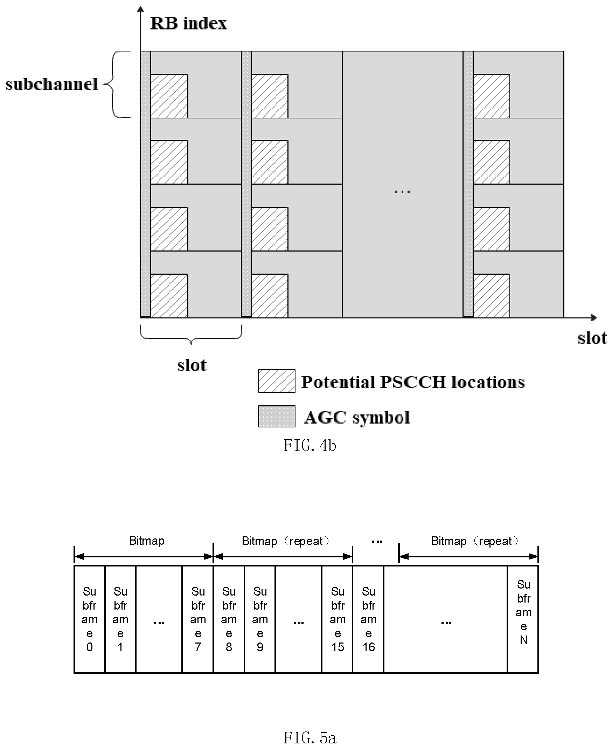

The following implementation processes in FIG. 4a and FIG. 4b mainly relate to sidelink resource selection.

In a network coverage area, the terminal device may obtain SL resource pool (resource pool) configuration information and/or SL bandwidth part (bandwidth part, BWP) configuration information by receiving a system information block (system information block, SIB), cell-specific (cell-specific) radio resource control (radio resource control, RRC) signaling, terminal apparatus user-specific (UE-specific) RRC signaling, or the like from the network device.

In addition, the terminal apparatus may alternatively use preconfigured SL resource pool configuration information or SL BWP configuration information. Resources in the resource pool include resources used by the terminal apparatus to send and receive at least one of the following physical channels:
a physical sidelink control channel (physical sidelink control channel, PSCCH), used to carry SCI;
a PSSCH, used to carry at least one of control information, data, sidelink CSI feedback information, or the like;
a physical sidelink discovery channel (physical sidelink discovery channel, PSDCH), used to carry a discovery message;
a PSFCH, used for sidelink feedback information, where the sidelink feedback information may be used for data information (which includes hybrid automatic repeat request (hybrid automatic repeat request, HARQ) acknowledgment feedback information, for example, acknowledgment (acknowledge, ACK) or negative acknowledgment (negative acknowledge, NACK), and may further include channel state information (channel state information, CSI) feedback information), and may further indicate at least one of the following information: for example, energy saving information and resource auxiliary information (including a resource recommended for use, a resource not recommended for use, a resource collision, a resource reservation conflict, and a half-duplex conflict that has occurred or is to occur in the future); and
a PSBCH, used to carry information related to sidelink synchronization, or the like.

Optionally, a type of a service carried on the PSSCH may include a unicast communication type, a multicast communication type, and/or a broadcast communication type.

In time domain, the SL resource pool includes one or more time units. The time unit may be one or more symbols, one or more slots (slots), one or more mini-slots (mini-slots), one or more subframes, one or more frames, or the like. The one or more time units may be contiguous or discrete in time. It should be understood that time domain units in one resource pool are logically contiguous. In this application, for understanding of definitions of the symbol, the mini-slot, the slot, the subframe, and the frame, refer to 3GPP TS 38.211. In this application, unless a meaning of the time unit is specially specified, a slot is used for description, but the time unit is not limited to only a slot. Unless a meaning of a time/frequency domain unit is specially specified, a subchannel is used for description, but the frequency domain unit is not limited to only a subchannel.

As shown in FIG. 4a, a slot 1 to a slot 8 are consecutive slots in terms of time, and the slots are referred to as physical slots (physical slot). The physical slots, namely, the slot 1, the slot 3, the slot 5, and the slot 8, are configured as slots that belong to one resource pool. Slots included in a resource pool may be nonconsecutive in terms of time. Therefore, from a perspective of the resource pool, the slot 1, the slot 3, the slot 5, and the slot 8 in the physical slots correspond to a slot 1', a slot 2', a slot 3', and a slot 4' in the resource pool. In this case, consecutive slots (namely, the slot 1', the slot 2', the slot 3', and the slot 4') included in the resource pool are logically consecutive slots in the resource pool, and the slots that are logically consecutive but not necessarily consecutive in terms of time are referred to as logical slots (logical slot). In frequency domain, the SL resource pool includes one or more frequency domain units. The frequency domain unit may be one resource element (resource element, RE), several REs, one resource block (resource block, RB), several RBs, one subchannel (subchannel), or several subchannels. A size of a subchannel indicates a quantity of one or more consecutive (continuous) or interlaced (interlaced) RBs included in one subchannel in frequency domain, and the quantity may be an integer such as 10, 12, 15, 20, 25, or 50.

In addition, the SL resource pool configuration information may further include PSCCH configuration information. The PSCCH configuration information includes a quantity of symbols occupied by a PSCCH in one slot and a quantity of RBs occupied by a PSCCH in one subchannel. The SL BWP configuration information may include SL resource pool information that is for configuring a quantity of resource pools included in a BWP. The SL BWP configuration information may include SL bandwidth information that indicates a size of a bandwidth for SL communication, for example, indicates that an SL bandwidth is 20 megahertz (MHz).

In addition, the SL BWP configuration information may further include SL symbol information that indicates a start SL symbol position in one slot and a quantity of occupied contiguous SL symbols. The SL BWP configuration information may further include information about a subcarrier spacing and a cyclic prefix that are of an SL, and the information indicates a subcarrier spacing and a cyclic prefix that are used for SL communication. The cyclic prefix indicates an extended cyclic prefix or a normal cyclic prefix. In a possible configuration, the SL BWP configuration information may further include the SL resource pool configuration information. In this application, unless a meaning of the time unit is specially specified, a slot is used for description, but the time unit is not limited to only a slot. Unless a meaning of a time/frequency domain unit is specially specified, a subchannel is used for description, but the frequency domain unit is not limited to only a subchannel.

SCI of an NR SL system is classified into 1st-stage SCI and 2nd-stage SCI. The PSCCH carries the 1st-stage SCI. The 1st-stage SCI is used to schedule the 2nd-stage SCI and the PSSCH. Because the SL is a distributed system, all UEs need to correctly decode the 1st-stage SCI before decoding the 2nd-stage SCI and the PSSCH.

Optionally, to reduce complexity of blind detection (blind detection) performed by the UE on the PSCCH, a resource position of the PSCCH is fixed, and format information of the carried 1st-stage SCI is unique. Therefore, the UE does not need to blindly detect a time-frequency resource position of the PSCCH or blindly detect SCI in different formats, but only needs to detect, at a fixed PSCCH time-frequency resource position, whether 1st-stage SCI exists.

Optionally, as shown in FIG. 4b, the PSCCH may exist on each sub-channel in each slot. To be specific, a time domain start position of a PSCCH is a second symbol used for SL transmission in each slot, and a length is two or three symbols (which is determined by resource pool configuration information). A frequency domain position of the PSCCH is a smallest PRB index of each sub-channel, and a length is at least 10 PRBs (which is determined by the resource pool configuration information) but does not exceed a size of the sub-channel.

In a possible implementation, a frequency domain resource assistance (Frequency resource assignment) field and a time domain resource assistance (Time resource assignment) field in the 1st-stage SCI respectively indicate a frequency domain resource and a time domain resource for transmitting the PSSCH, and a resource reservation period (Resource reservation period) field indicates a periodically reserved resource for transmitting the PSSCH. A value of the resource reservation period field is configured by the network device, preconfigured, or predefined, for example, indicated by using first RRC signaling, where the first RRC signaling may be determined based on sl-ResourceReservePeriod1. A format of the 2nd-stage SCI is indicated by a 2nd-stage SCI format (2nd-stage SCI format) field in the 1st-stage SCI. For example, the 2nd-stage SCI format field is shown in Table 1.

**Table 1**

| Value of 2nd-stage SCI format field | 2nd-stage SCI format |
|---|---|
| 00 | SCI format 2-A |
| 01 | SCI format 2-B |
| 10 | SCI format 2-C |
| 11 | Reserved |

In a possible implementation, a transmission resource of a transmit-end UE in the mode (mode 2) in which a user autonomously selects a resource does not depend on the base station. The transmitter UE selects, in a resource selection window based on a result of sensing in a sensing window of the transmitter UE, a transmission resource for communication.

The following implementation processes in FIG. 5a to FIG. 5f mainly relate to an implementation process of a PSFCH.

A time-frequency resource for SL communication is configured by using an SL communication resource pool. The SL communication resource pool may be considered as a set of time resources and frequency resources used for SL communication. For a time resource, a base station uses a bitmap (bitmap) and periodically repeats the bitmap to indicate all subframes in a system, to indicate a time domain resource set of a subframe used for SL communication.

For example, as shown in FIG. 5a, a length of the bitmap is 8 bits, a quantity of symbols occupied for SL transmission in each subframe is fixed at M symbols, and M is defined as one SL time domain transmission duration or time domain transmission unit.

For a frequency resource in the SL communication resource pool, a base station divides a frequency band used for SL communication into several subchannels, and each subchannel includes a particular quantity of resource blocks.

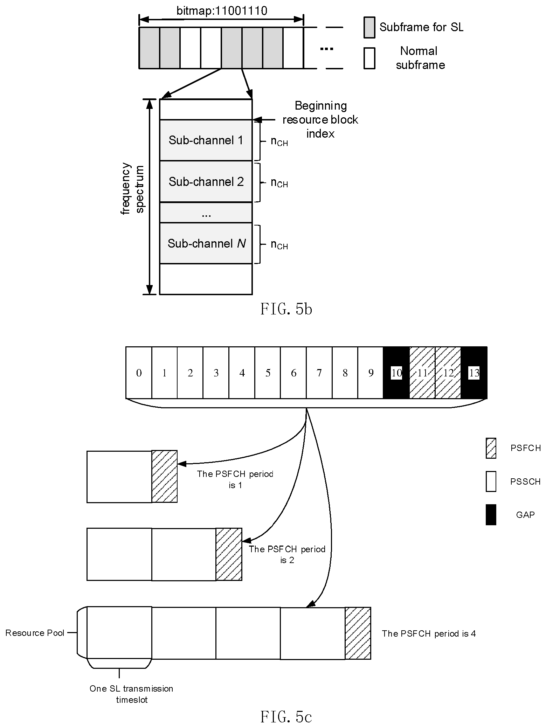

For example, FIG. 5b is a diagram of a frequency resource in a communication resource pool. The base station indicates a sequence number of a first resource block of a frequency resource used for SL communication, a total quantity N of sub-channels included in the communication resource pool, and a quantity n_{CH} of resource blocks included in each sub-channel. One SL transmission may occupy one or more subchannels. When an SL communication resource is scheduled, scheduling in frequency domain is performed at a granularity of subchannel.

NR-V2X supports HARQ-ACK feedback at a physical layer. To be specific, for one PSSCH transmission, if a transmitter user includes HARQ-ACK feedback enabling information in control information, a receiver user needs to feed back response ACK/NACK information based on a current PSSCH decoding result. The ACK/NACK information is transmitted through a PSFCH channel. A PSFCH channel resource is a periodic resource configured in the resource pool, and a periodic configuration parameter ${N}_{PSSCH}^{PSFCH}$ of the PSFCH channel resource may be 0, 1, 2, or 4. ${N}_{PSSCH}^{PSFCH} = 0$ indicates that no PSFCH resource is configured in the resource pool, and PSFCH transmission is not enabled in the resource, that is, physical layer HARQ feedback is not supported; and ${N}_{PSSCH}^{PSFCH} = 1 , 2 , 4$ indicates that there is one PSFCH feedback slot in every ${N}_{PSSCH}^{PSFCH}$ SL slots within one time window.

For example, as shown in FIG. 5c, in a slot in which a physical resource of the PSFCH is located, the PSFCH occupies last two symbols before the GAP.

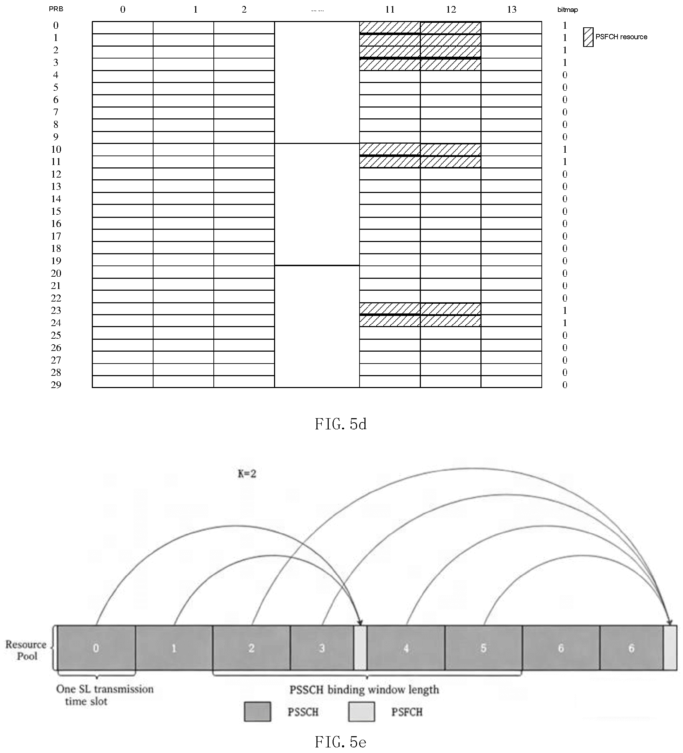

If a PSFCH feedback resource is configured in the resource pool, the PSFCH feedback resource is configured once every N slots. In a scenario of a V2X transmission mode 2, different from base station scheduling, a user needs to autonomously select a PSSCH sending resource based on a sensing result of the user. To simplify a PSFCH resource selection process, NR-V2X configures a PSFCH feedback resource for each PSSCH sub-channel. A specific process of determining a PSFCH resource corresponding to each sub-channel is as follows:
1. A bitmap (bitmap) of a PSFCH frequency domain resource is configured in the resource pool, to indicate whether a specific PRB on a frequency domain resource in which the resource pool is located can be used as a PSFCH resource. To be specific, a length of bit information included in the bitmap is equal to a quantity of PRBs in the resource pool. 1 in the bitmap indicates that a corresponding PRB can be used for PSFCH transmission, a bit 0 indicates that a corresponding PRB resource cannot be used for PSFCH transmission, and a leftmost bit of the bitmap indicates a lowest RB index in the resource pool. Particularly, a PSFCH resource may be used for HARQ-ACK transmission, and a resource thereof is represented by an sl-PSFCH-RB-Set bitmap. A bit 1 in the bitmap indicates that a corresponding PRB resource can be used for HAQR-ACK feedback. In addition, the PSFCH resource may also indicate a conflict in an inter-user coordination (inter-UE coordination, IUC) Scheme2 mode, and the resource is represented by a bitmap corresponding to sl-RB-SetPSFCH. In the bitmap, 1 indicates that a corresponding PRB resource may indicate a conflict in Scheme2. It should be noted that positions with bit values of 1 in sl-PSFCH-RB-Set and sl-RB-SetPSFCH do not overlap. As shown in the foregoing figure, in a slot having a PSFCH transmission resource, if one sub-channel includes 10 PRBs and a resource pool has three sub-channels in total, a bitmap indicating PSFCH frequency domain resources in the resource pool includes 3×10=30 bits in total to indicate whether each PRB can be used for PSFCH transmission.
   For example, as shown in FIG. 5d, the bitmap indicates that first four PRBs of each subchannel may be used for PSFCH feedback, and the bitmap may indicate the foregoing HARQ-ACK resource, or may indicate a scheme2 conflict resource.
2. Because every N PSSCH slots correspond to one PSFCH feedback slot, for a resource pool including N_{subch} sub-channels, a quantity of RBs of a PSFCH feedback resource corresponding to each sub-channel is ${M}_{subch , slot}^{PSFCH} = {M}_{PRB , set}^{PSFCH} / \left({N}_{subch}⋅{N}_{PSSCH}^{PSFCH}\right)$, where ${M}_{PRB , set}^{PSFCH}$ represents a quantity of PRBs of a PSFCH frequency domain resource, that is, indicates a total quantity of bits 1 in a bitmap of the PSFCH frequency domain resource.
3. Considering a limitation of a decoding capability of the receiver user, the receiver user cannot immediately perform feedback after receiving a PSSCH. Therefore, a time interval K for PSSCH feedback is defined in the standard. To be specific, a PSFCH is transmitted, for the PSSCH, in a first available slot including a PSFCH resource. The slot and a slot in which the PSSCH is located are spaced by at least K slots, where a value of K is configured by the resource pool.
   For example, as shown in FIG. 5e, when K = 2, for PSSCHs carried in slots 0 and 1, feedback may be performed on a PSFCH resource in a slot 3, and for PSSCHs carried in slots 2, 3, 4, and 5, feedback is performed on a PSFCH resource in a slot 7. In addition, because feedback for the slots 2, 3, 4, and 5 is performed on the PSFCH resource in one slot, the slots 2, 3, 4, and 5 may be referred to as a PSSCH bundling window length.
4. Available PSFCH resources in a PSFCH feedback slot are sequentially allocated, in a manner of time domain first and then frequency domain, to each subchannel in a feedback period.

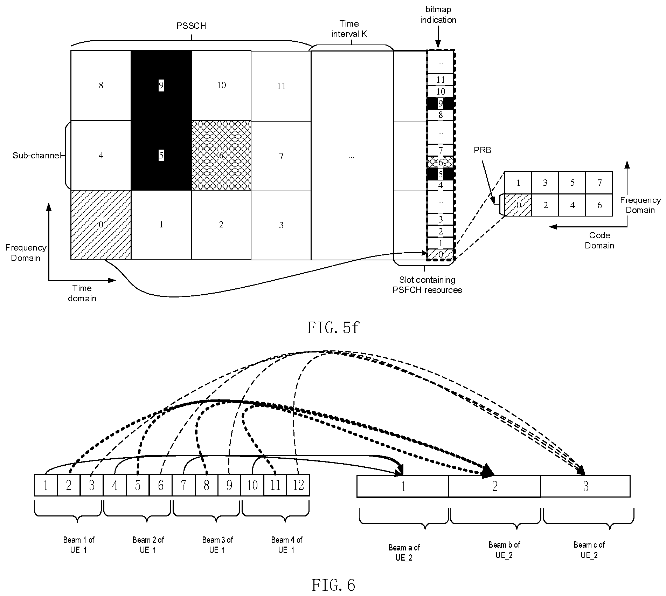

For example, as shown in FIG. 5f, when ${N}_{PSSCH}^{PSFCH} = 4$, a PSFCH resource corresponding to each subchannel in four bundled PSSCH slots is a PSFCH feedback resource of one PRB allocated to each subchannel in each slot. Using a formula for representation, for an i^{th} slot in N bundled PSSCH slots, if a frequency domain sub-channel number of the slot in the resource pool is j, a PSFCH resource corresponding to the slot is $\left[\left(i+j⋅{N}_{PSSCH}^{PSFCH}\right)⋅{M}_{subch , slot ′}^{PSFCH}\left(i+1+j⋅{N}_{PSSCH}^{PSFCH}\right)⋅{M}_{subch , slot}^{PSFCH}-1\right]$ . As shown in FIG. 5f, if a user occupies two subchannels for transmission, PSFCH resources (for example, resources numbered 5 and 9 in FIG. 5f) corresponding to the subchannels are inconsecutive in frequency domain.

For PSFCH feedback, a NACK and a NACK form a pair, and both are represented by different orthogonal sequences, that is, code domains. A quantity of valid pairs may be configured by using a parameter, and is numMaxCSPair = {1, 2, 3, 4, 6}, and correspondingly, a maximum of {2, 4, 6, 8,12} pieces of information can be fed back.

It can be learned from the foregoing description that if one PSSCH occupies ${N}_{subch}^{PSSCH}$ sub-channels, the PSSCH corresponds to ${N}_{subch}^{PSSCH} ⋅ {M}_{subch , slot}^{PSFCH} ⋅ {N}_{CS}^{PSFCH}$ PSFCH feedback resource pairs, where ${N}_{CS}^{PSFCH}$ represents a quantity of PSFCH sequence pairs that can be multiplexed on a PSFCH resource of one PRB configured in a resource pool, and ${M}_{subch , slot}^{PSFCH}$ represents a quantity of PRBs of a PSFCH resource allocated to each sub-channel. In addition, the resource pool may further limit, by configuring ${N}_{type}^{PSFCH}$, a PSFCH feedback resource that can be used by a receiver user of the PSSCH. There are the following two solutions:

If the resource pool configures ${N}_{type}^{PSFCH} = 1$, the receiver user of the PSSCH can use only a PSFCH resource corresponding to the first subchannel of the PSSCH, that is, ${R}_{PRB , CS}^{PSFCH} = {M}_{subch , slot}^{PSFCH} ⋅ {N}_{CS}^{PSFCH}$ . As shown in FIG. 5f, when the PSSCH occupies two sub-channels numbered 5 and 9 for data transmission, the receiver user of the PSSCH can use only a PSFCH resource numbered 5 for feedback.

If the resource pool configures ${N}_{type}^{PSFCH} = {N}_{subch}^{PSSCH}$, the receiver user of the PSSCH can use PSFCH resources corresponding to all sub-channels of the PSSCH for feedback, that is, ${R}_{PRB , CS}^{PSFCH} = {M}_{subch}^{PSSCH} ⋅ {M}_{subch , slot}^{PSFCH} ⋅ {N}_{CS}^{PSFCH}$.

The transmitter user selects a resource corresponding to a $\left[\left({P}_{ID}+{M}_{ID}\right){modR}_{PRB , CS}^{PSFCH}\right]$^{th} PSFCH resource pair to feed back a PSFCH, where P_{ID} represents a physical layer source address ID carried in control information, and for multicast 2, M_{ID} is an ID configured by a higher layer of each receiver user for current PSSCH information transfer. Otherwise, M_{ID} = 0. ${R}_{PRB , CS}^{PSFCH}$ PSFCH resource pairs are arranged in ascending order in a manner of frequency domain index first and then code domain index in all PSFCH sequences, that is, a PRB index corresponding to PSFCH feedback is $\left(\left({P}_{ID}+{M}_{ID}\right){modR}_{PRB , CS}^{PSFCH}\right) mod \left({R}_{PRB , CS}^{PSFCH}/\left({N}_{CS}^{PSFCH}∗{N}_{type}^{PSFCH}\right)\right)$. In the PRB, a cyclic shift index corresponding to the PSFCH feedback is $Cyclic Shift Pair Index = \left⌊\left(\left({P}_{ID}+{M}_{ID}\right){modR}_{PRB , CS}^{PSFCH}\right)/\left({R}_{PRB , CS}^{PSFCH}/\left({N}_{CS}^{PSFCH}∗{N}_{type}^{PSFCH}\right)\right)\right⌋$ , and m₀ for generating a PSFCH feedback sequence is determined according to Table 2 below.

**Table 2**

| ${N}_{CS}^{PSFCH}$ | m₀ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

It can be learned from the foregoing analysis that, due to different M_{ID}, for multicast 2, each user in the group uses a different PSFCH resource pair for feedback, and the transmitter user correspondingly receives each resource pair separately (the prerequisite is that M_{ID} of each user in the group is known to all members in the group). For multicast 1, because M_{ID} = 0, for a PSSCH whose source address P_{ID} is determined, each member in the group uses a same PSFCH to feed back NACK information.

The foregoing content describes some communication processes of a sidelink (SL). Currently, in an SL communication process, different terminal devices may communicate with each other by using a multiple-input multiple-output (multi-input multi-output, MIMO) technology, to satisfy a high-rate transmission requirement. In a MIMO technology-based communication process, a signal transmitter and a signal receiver each may have a plurality of communication beams. It can be learned from the foregoing processes shown in FIG. 3a and FIG. 3b that current beam management mainly relates to uplink and downlink implementation processes. However, in a sidelink communication process, for the signal transmitter and the signal receiver, how to perform beam management on the communication beams is an urgent technical problem to be resolved.

In a possible implementation, if an uplink and downlink implementation process is still used, in a beam management implementation process, a signal transmitter on a sidelink may separately send a plurality of signals based on a plurality of transmit beams. Then, a signal receiver on the sidelink may receive the plurality of signals based on a plurality of receive beams. In addition, the signal receiver may feed back one of the plurality of signals to the signal transmitter.

Correspondingly, in the feedback process, the signal transmitter may receive and send a signal based on a beam corresponding to one of the signals, and the signal receiver may also receive and send a signal based on a beam corresponding to the one of the signals. In other words, by using the feedback process, both a receive beam and a transmit beam of a signal receiver can be determined, that is, the foregoing beam management process is applicable to a scenario in which a receive beam and a transmit beam of any end are a same beam. In this scenario, the signal transmitter and the signal receiver may also support beam correspondence (beam correspondence).

However, on a sidelink, channel environments between different communication devices are not constant. It is possible that a channel status in a communication direction between a signal transmitter and a signal receiver is different from a channel status in a communication direction between a signal receiver and a signal transmitter (or a highest moving speed of the signal transmitter and/or the signal receiver may cause a communication beam change). In this case, a transmit beam and a receive beam at either end of the signal transmitter and the signal receiver may no longer be a same beam, in this scenario, signals can also be carried. The transmitter and receiver do not support beam correspondence (beam correspondence).

In an implementation example shown in FIG. 6, two different terminal devices on a sidelink may be represented as UE_1 and UE_2 in FIG. 6. The UE_1 may be a transmitter (that is, a signal transmitter) of a reference signal, and the UE_2 may be a receiver (that is, a signal receiver) of a reference signal. In this example, a communication beam of the UE_1 includes four beams: beams 1, 2, 3, and 4, and a communication beam of the UE_2 includes three beams: beams a, b, and c.

In the example shown in FIG. 6, if a beam management process (for example, the processes shown in FIG. 3a to FIG. 3b) of an uplink and downlink communication process is still used, the UE_1 may send three times for each of the four beams. In this example, the three reference signals sent by the beam 1 of the UE_1 may be located on the resource 1, the resource 2, and the resource 3, the three reference signals sent by the beam 2 of the UE_1 may be located on the resource 4, the resource 5, and the resource 6, the three reference signals sent by the beam 3 of the UE_1 may be located on the resource 7, the resource 8, and the resource 9, and the three reference signals sent by the beam 4 of the UE_1 may be located on the resource 10, the resource 11, and the resource 12. That is, the UE_1 may send 12 reference signals on the 12 resources respectively.

In addition, after the UE_2 separately receives the 12 reference signals on the 12 resources, the UE_2 may measure the 12 reference signals to obtain corresponding 12 pieces of signal quality information. The UE_2 may determine a reference signal corresponding to signal quality information with relatively good (or optimal) signal quality in the 12 reference signals, and send feedback information on three resources (the three resources are respectively corresponding to three beams of the UE_2) configured or preconfigured for the UE_2, in addition, the UE_1 and the UE_2 determine transmit and receive beams of the UE_1 and the UE_2 by using the resource location of the feedback information. The feedback resource corresponding to each reference signal is a correspondence pointed by an arrow shown in FIG. 6. For example, feedback resources corresponding to the resource 1, the resource 4, the resource 7, and the resource 10 are the resource 1 corresponding to the "beam a of the UE-2". For another example, the feedback resources corresponding to the resource 2, the resource 5, the resource 8, and the resource 11 are the resource 2 corresponding to the "beam b of the UE-2". For another example, the feedback resources corresponding to the resource 3, the resource 6, the resource 9, and the resource 12 are the resource 3 corresponding to the "beam c of the UE-2".

For example, after the UE_2 may measure the 12 reference signals to obtain corresponding 12 pieces of signal quality information, the UE_2 determines that signal quality information of a fourth reference signal sent by the UE_1 on the resource 4 corresponding to the beam 2 is better (or optimal) signal quality information. As shown in FIG. 6, the UE_2 may determine that the transmit beam of the UE_1 is the "beam 2 of the UE_1" corresponding to the resource 4. In addition, the UE_2 may determine, based on the resource mapping relationship shown in FIG. 6, that receiving quality of the beam a of the UE_2 is relatively good (or best). Therefore, the UE_2 may determine that the "beam a of the UE_2" is the receive beam of the UE_2. In addition, in this implementation process, the UE_1 and the UE_2 consider by default that an optimal transmit beam of any device is the same as an optimal receive beam. Therefore, the UE_2 may send the feedback information on the resource 1 corresponding to the "beam a of the UE_2" in FIG. 6, so that when the UE_1 detects the feedback information on the resource 1, the UE_1 may determine, based on the resource mapping relationship shown in FIG. 6, that the feedback information corresponds to the "beam 2 of the UE_1" and the "beam a of the UE_2". In other words, by using one step of feedback information, the UE_1 and the UE_2 may determine that an optimal transmit/receive beam of the UE_1 is "the beam 2 of the UE_1", and an optimal transmit/receive beam of the UE_2 is "the beam a of the UE_2". Subsequently, the UE_1 and the UE_2 may communicate with each other by using the "the beam 2 of the UE_1" and the "the beam a of the UE_2".

However, in the example shown in FIG. 6, by default, the signal transmitter and the signal receiver support beam correspondence. However, when the signal transmitter and the signal receiver do not support beam correspondence, an optimal receive beam and an optimal transmit beam of UE may not be a same beam. Therefore, when the UE receives a signal based on the optimal transmit beam of the UE, signal quality may be relatively poor (even a signal cannot be received), and communication efficiency may be relatively low or even communication may fail. For example, in a process of communication between the UE_1 and the UE_2, if an optimal transmit beam of the UE_1 is "beam 2 of the UE_1" and an optimal receive beam of the UE_1 is another beam, after the UE_1 receives feedback on the resource 1, if the UE_1 still uses "beam 2 of the UE_1" to receive a signal from the UE_2, because the optimal receive beam of the UE_1 is another beam, the UE_1 may fail to receive the signal.

Therefore, how to implement beam management when a signal transmitter and/or a signal receiver do/does not support beam correspondence is an urgent technical problem to be resolved.

To resolve the foregoing problem, this application provides a communication method and a related device. The following provides detailed descriptions with reference to the accompanying drawings.

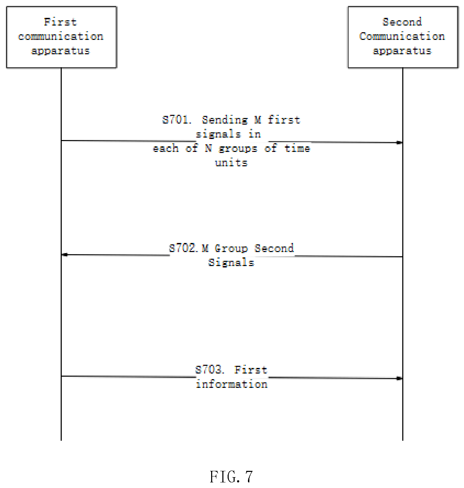

FIG. 7 is a diagram of an implementation of a communication method according to this application. The method includes the following steps.

It needs to be noted that, in FIG. 7, an example in which a first communication apparatus and a second communication apparatus are used as execution bodies for the interaction example is used to illustrate the method. However, the execution bodies for the interaction example are not limited in this application. For example, in FIG. 3 and FIG. 7 below, an execution body of the method may be replaced with a chip, a chip system, a processor, a logical module, software, or the like in the communication apparatus. Both the first communication apparatus and the second communication apparatus are terminal devices.

S701. A first communication apparatus sends M first signals in each of N groups of time units, and correspondingly, a second communication apparatus receives the M first signals in each of the N groups of time units. The M first signals are respectively carried in M time units in each group of time units, and both N and M are integers greater than 1.

It should be understood that in step S701, the M groups of first signals may be reference signals, for example, a sidelink-synchronization signal block (sidelink synchronization signal block, S-SSB, or SL-SSB) or a sidelink-channel state information reference signal (sidelink channel state information reference signal, SL-CSI-RS).

S702. The second communication apparatus sends M groups of second signals, and correspondingly, the first communication apparatus receives the M groups of second signals. The M groups of second signals are used to determine a third signal in the M first signals. The ith group of second signals in the M groups of second signals is carried on an ith group of time domain resources in the M groups of time domain resources, the ith group of time domain resources in the M groups of time domain resources is a feedback resource of the ith first signal in the M first signals, each group of time domain resources in the M groups of time domain resources includes X resources, i is a positive integer less than or equal to M, and X is a positive integer less than or equal to N.

It should be understood that the ith group of time domain resources in the M groups of time domain resources is a feedback resource for the ith first signal in the M first signals. Correspondingly, the M groups of time domain resources may be PSFCH resources. Alternatively, the M groups of time domain resources may be other resources, for example, a PSFCH or a PSSCH.

S703: The second communication apparatus sends the first information, and correspondingly, a first communication apparatus receives the first information. The first information is used to determine a first group of time units in the N groups of time units.

In this application, in time-domain-related resources (for example, any one of the N groups of time units, any one of the M groups of time domain resources, any one of the X resources, any one of M resources mentioned below, or any one of X time domain units mentioned below), each resource may include one or more time units, and the time unit may be a symbol, a slot (slot), a mini-slot (mini-slot), a subframe, or a frame.

In this application, for the first communication apparatus and/or the second communication apparatus, a resource used to carry a signal (for example, N groups of time units used to carry M first signals, or M groups of time domain resources used to carry M groups of second signals) may be determined in a plurality of manners, for example, preconfigured by a protocol/standard, or configured by a network device.

Optionally, for the first communication apparatus and/or the second communication apparatus, a value of N and a value of M may be preconfigured in a protocol/standard, or may be configured by the network device. This is not limited herein.

It should be noted that, in the N groups of time units, each group of time units is used to send the M first signals, that is, each group of time units includes M resources used to carry the M first signals. The M resources included in each of the N groups of time units may be implemented in a plurality of manners. In the following examples, that N is greater than 2 is used for description.

Implementation example 1: In time domain, M resources included in a j^{th} (a value of j ranges from 1 to N-1) group of time units in the N groups of time units are all located before a (j+1)^{th} group of time units.

In other words, in the implementation example 1, in the N groups of time units, after sending the M first signals for the first time based on M beams (that is, after sending the first signals through scanning on the M beams for the first time), the first communication apparatus may send the M first signals for the second time based on the M beams, and by analogy, send the M first signals for the N^{th} time based on the M beams. Correspondingly, in the N groups of time units, after receiving the M first signals based on a first beam in N beams, the second communication apparatus may receive the M first signals based on a second beam in the N beams, and by analogy, receive the M first signals based on an N^{th} beam in the N beams.

For example, in the implementation example 1, in the N groups of time units, after sending the M first signals included in the first group of time units, the first communication apparatus sends the M first signals included in a second group of time units. By analogy, after the first communication apparatus sends the M first signals included in an N^{th} group of time units, the first communication apparatus completes a process of sending the M first signals in each of the N groups of time units.

Correspondingly, in the implementation example 1, a receiver (namely, the second communication apparatus) of the M first signals may fixedly use one beam for reception in M beams in a single group in the N groups. In other words, the second communication apparatus respectively receives the M first signals in the N groups of time units based on the N beams. For example, the second communication apparatus receives the M first signals in a j^{th} group of time units in the N groups of time units based on a j^{th} beam in the N beams, where j is a positive integer less than or equal to X (X is less than or equal to N).

Optionally, in the implementation example 1, in the N groups of time units, M resources included in any group of time units may be consecutive time resources in time domain.

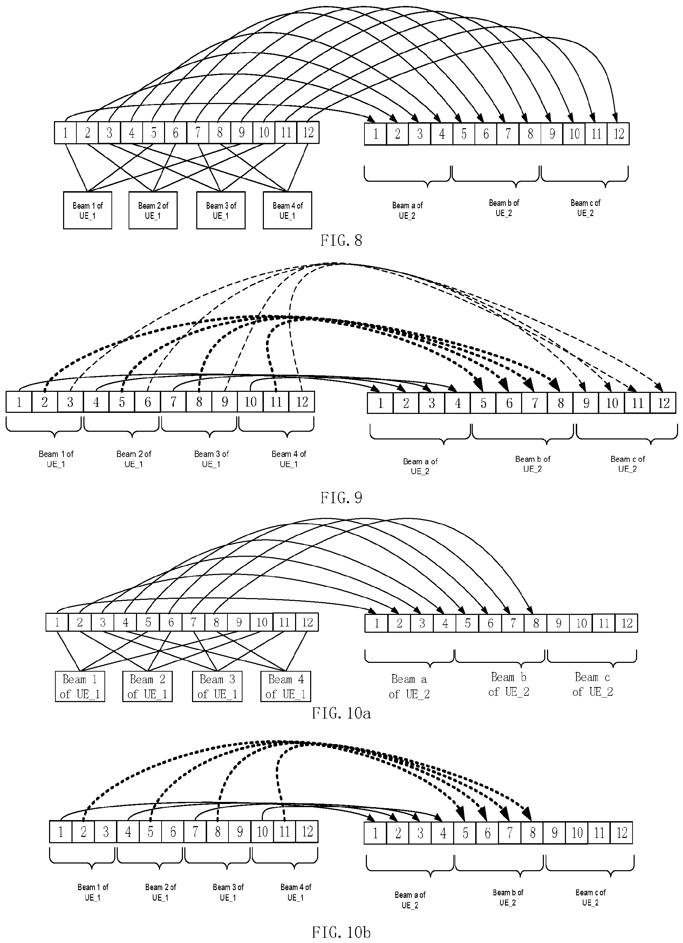

As shown in FIG. 8, FIG. 8 is an application example of implementing Example 1. In this application example, a value of M is 4 and a value of N is 3. In addition, the first communication apparatus is denoted as UE_1, and the second communication apparatus is denoted as UE_2.

In FIG. 8, the first communication apparatus may send the first signal on the resource 1 to the resource 12 on the left side of FIG. 8, where 3 (that is, N=3) groups of time units respectively include the following resources:
A first group of time units: a resource 1, a resource 2, a resource 3, and a resource 4, that is, UE_2 receives a first signal on the resource 1 to the resource 4 based on the "beam a of UE_2".
A second group of time units: a resource 5, a resource 6, a resource 7, and a resource 8, that is, UE_2 receives a first signal on the resource 5 to the resource 8 based on the "beam b of UE_2".
A third group of time units: a resource 9, a resource 10, a resource 11, and a resource 12, that is, the UE_2 receives the first signal on the resource 9 to the resource 12 based on the "beam c of the UE_2".

It can be learned with reference to the description of the foregoing implementation example 1:
In FIG. 8, each group of time units includes four (that is, M=4) resources. For example, the first group of resources includes a resource 1, a resource 2, a resource 3, and a resource 4.

In FIG. 8, each group of time units includes four first signals respectively carried on four (that is, M=4) resources, and the four first signals are sent by using four different beams (that is, "beam 1 of UE_1", "beam 2 of UE_1", "beam 3 of UE_1", and "beam 4 of UE_1"). For example, a resource 1 included in the first group of resources is used to carry a first signal sent by a beam 1, a resource 2 is used to carry a first signal sent by a beam 2, a resource 3 is used to carry a first signal sent by a beam 3, and a resource 4 is used to carry a first signal sent by a beam 4.

In FIG. 8, all four resources (that is, resources 1 to 4) included in the first group of time units are located before four resources (that is, resources 5 to 8) included in the second group of time units, and all four resources (that is, resources 5 to 48) included in the second group of time units are located in four resources (that is, resources 9 to 12) included in the third group of time units.

In addition, it can be learned from an implementation process of step S702 that the M groups of time domain resources used to carry the M groups of second signals are feedback resources corresponding to the M first signals. In an example, FIG. 8 is still used as an example herein. A correspondence between arrows shown in FIG. 8 is feedback resources corresponding to 12 first signals respectively sent by the four beams of the UE_1. In FIG. 8, the second communication apparatus may send the second signal on the resource 1 to the resource 12 on the right side of FIG. 8. Four (that is, N=4) groups of time units respectively include the following resources:
A first group of time domain resources: feedback resources of three sending resources (that is, a resource 1, a resource 5, and a resource 9) of "beam 1 of UE_1" on the left side are respectively a resource 1, a resource 5, and a resource 9 on the right side. That is, the three beams of the UE_2 are respectively on the resource 1, the resource 5, and the resource 9, and the second signal is sent based on the "beam a of the UE_2", the "beam b of the UE_2", and the "beam c of the UE_2".
A second group of time domain resources: feedback resources of three sending resources (that is, a resource 2, a resource 6, and a resource 10) of "beam 1 of UE_1" on the left side are respectively a resource 2, a resource 6, and a resource 10 on the right side. That is, three beams of UE_2 are respectively on the resource 2, the resource 6, and the resource 10, and the second signal is sent based on the "beam a of UE_2", the "beam b of UE_2", and the "beam c of UE_2".
A third group of time domain resources: feedback resources of three sending resources (that is, a resource 3, a resource 7, and a resource 11) of "beam 1 of UE_1" on the left side are respectively a resource 3, a resource 7, and a resource 11 on the right side, that is, three beams of UE_2 are respectively on the resource 3, the resource 7, and the resource 11 to send a second signal based on "beam a of UE_2", "beam b of UE_2", and "beam c of UE_2".
A fourth group of time domain resources: feedback resources of three sending resources (that is, a resource 4, a resource 8, and a resource 12) of "beam 1 of UE_1" on the left side are respectively a resource 4, a resource 8, and a resource 12 on the right side. To be specific, the three beams of UE_2 are respectively on the resource 4, the resource 8, and the resource 12, and the second signal is sent based on "beam a of UE_2", "beam b of UE_2", and "beam c of UE_2".

In this resource configuration manner, the second communication apparatus can feed back four groups of second signals for the four beams (that is, M=4) of the UE_1 in step S702, and the first communication apparatus determines a third signal in the M first signals based on the information carried by the M groups of second signals. In other words, the first communication apparatus may determine a transmit beam (or an optimal transmit beam) of the first communication apparatus by using the M groups of second signals.

Implementation example 2: In time domain, an i^{th} resource in M resources included in a j^{th} (a value of j ranges from 1 to N-1) group of time units in the N groups of time units is located before an i^{th} resource in M resources included in a (j+1)^{th} group of time units, and an (i+1)^{th} resource in the M resources included in the j^{th} group of time units in the N groups of time units is located after the i^{th} resource in the M resources included in the (j+1)^{th} group of time units.

In other words, in the implementation example 2, in the N groups of time units, after sending a 1^{st} first signal in the M first signals for N times based on a first beam in M beams, the first communication apparatus may send a 2^{nd} first signal in the M first signals for N times based on a second beam in the M beams, and by analogy, send an M^{th} first signal in the M first signals for N times based on an M^{th} beam in the M beams. Correspondingly, in the N groups of time units, after receiving the 1^{st} first signal in the M first signals based on N beams, the second communication apparatus may receive the 2^{nd} first signal in the M first signals based on a second beam in the N beams, and by analogy, receives the M^{th} first signal in the M first signals based on an N^{th} beam in the N beams.

For example, in the implementation example 2, in the N groups of time units, after sending the 1^{st} first signal in the M first signals included in the first group of time units, the first communication apparatus sends the 1^{st} first signal in the M first signals included in the second group of time units, ..., and the first communication apparatus sends the 1^{st} signal in the M first signals included in the N^{th} group of time units. Then, after sending the 2^{nd} first signal in the M first signals included in the first group of time units, the first communication apparatus sends the 2^{nd} first signal in the M first signals included in the second group of time units, ..., and the first communication apparatus sends the 1^{st} signal in the M second signals included in the N^{th} group of time units. By analogy, after sending the M^{th} first signal in the M first signals included in the first group of time units, the first communication apparatus sends the M^{th} first signal in the M first signals included in the second group of time units, ..., and after the first communication apparatus sends the M^{th} signal in the M second signals included in the N^{th} group of time units, the first communication apparatus completes a process of sending the M first signals in each of the N groups of time units.

Correspondingly, in the implementation example 2, a receiver (namely, the second communication apparatus) of the M first signals may fixedly use one beam for reception in M beams in a single group in the N groups. In other words, the second communication apparatus respectively receives the M first signals in the N groups of time units based on the N beams. For example, the second communication apparatus receives the M first signals in a j^{th} group of time units in the N groups of time units based on a j^{th} beam in the N beams, where j is a positive integer less than or equal to X (X is less than or equal to N).

It may be understood that in the implementation example 2, in the N groups of time units, M resources included in any group of time units are inconsecutive time resources in time domain.

As shown in FIG. 9, FIG. 9 is an application example of implementing Example 2. In this application example, an example in which a value of M is 4 and a value of N is 3 is still used. In addition, the first communication apparatus is denoted as UE_1, and the second communication apparatus is denoted as UE_2.

In FIG. 9, the first communication apparatus may send the first signal on the resource 1 to the resource 12 on the left side of FIG. 8, where 3 (that is, N=3) groups of time units respectively include the following resources:
A first group of time units: a resource 1, a resource 4, a resource 7, and a resource 10, that is, UE_2 receives a first signal on the resource 1, the resource 4, the resource 7, and the resource 10 based on the "beam a of the UE_2".
A second group of time units: a resource 2, a resource 5, a resource 8, and a resource 11, that is, UE_2 receives a first signal on the resource 2, the resource 5, the resource 8, and the resource 11 based on the "beam b of UE_2".
A third group of time units: a resource 3, a resource 6, a resource 9, and a resource 12, that is, the UE_2 receives the first signal on the resource 3, the resource 6, the resource 9, and the resource 12 based on the "beam c of the UE_2".

It can be learned with reference to the description of the foregoing implementation example 2:
In FIG. 9, each group of time units includes four (that is, M=4) resources. For example, the first group of resources includes a resource 1, a resource 4, a resource 7, and a resource 10.

In FIG. 9, each group of time units includes four first signals respectively carried on four (that is, M=4) resources, and the four first signals are sent by using four different beams (that is, "beam 1 of UE_1", "beam 2 of UE_1", "beam 3 of UE_1", and "beam 4 of UE_1"). For example, a resource 1 included in the first group of resources is used to carry a first signal sent by a beam 1, a resource 4 is used to carry a first signal sent by a beam 2, a resource 7 is used to carry a first signal sent by a beam 3, and a resource 10 is used to carry a first signal sent by a beam 4.

In FIG. 9, the ith resource in the four resources included in the first group of time units is located before the ith resource in the four resources included in the second group of time units (that is, the resource 1 is located before the resource 2, the resource 4 is located before the resource 5, the resource 7 is located before the resource 8, and the resource 10 is located before the resource 11). The (i+1)th resource in the four resources included in the first group of time units is located after the ith resource in the four resources included in the second group of time units (that is, the resource 4 is located after the resource 2, the resource 7 is located after the resource 5, and the resource 10 is located after the resource 8).

Similarly, the ith resource in the four resources included in the second group of time units is located before the ith resource in the four resources included in the third group of time units (that is, the resource 2 is located before the resource 3, the resource 5 is located before the resource 6, the resource 8 is located before the resource 9, and the resource 11 is located before the resource 12). The (i+1)th resource in the four resources included in the first group of time units is located after the ith resource in the four resources included in the second group of time units (that is, the resource 5 is located after the resource 3, the resource 8 is located after the resource 6, and the resource 11 is located after the resource 9).

In addition, it can be learned from an implementation process of step S702 that the M groups of time domain resources used to carry the M groups of second signals are feedback resources corresponding to the M first signals. In an example, FIG. 9 is still used as an example herein. A correspondence between arrows shown in FIG. 9 is feedback resources corresponding to 12 first signals respectively sent by the four beams of the UE_1. In FIG. 9, the second communication apparatus may send the second signal on the resource 1 to the resource 12 on the right side of FIG. 8. Four (that is, N=4) groups of time units respectively include the following resources:
A first group of time domain resources: feedback resources of three sending resources (that is, resources 1 to 3) of "beam 1 of UE_1" on the left side, which are respectively a resource 1, a resource 5, and a resource 9 on the right side. That is, the three beams of the UE_2 are respectively on the resource 1, the resource 5, and the resource 9, and the second signal is sent based on the "beam a of the UE_2", the "beam b of the UE_2", and the "beam c of the UE_2".
A second group of time domain resources: feedback resources of three sending resources (that is, resources 4 to 6) of "beam 1 of UE_1" on the left side are respectively a resource 2, a resource 6, and a resource 10 on the right side. That is, three beams of UE_2 are respectively on the resource 2, the resource 6, and the resource 10, and the second signal is sent based on "beam a of UE_2", "beam b of UE_2", and "beam c of UE_2".
A third group of time domain resources: feedback resources of three sending resources (that is, resources 7 to 9) of "beam 1 of UE_1" on the left side are respectively a resource 3, a resource 7, and a resource 11 on the right side, that is, three beams of UE_2 are respectively on the resource 3, the resource 7, and the resource 11, and the second signal is sent based on "beam a of UE_2", "beam b of UE_2", and "beam c of UE_2".
A fourth group of time domain resources: feedback resources of three sending resources (that is, resources 10 to 12) of "beam 1 of UE_1" on the left side are respectively a resource 4, a resource 8, and a resource 12 on the right side. That is, the three beams of UE_2 are respectively on the resource 4, the resource 8, and the resource 12, and the second signal is sent based on "beam a of UE_2", "beam b of UE_2", and "beam c of UE_2".

In this resource configuration manner, the second communication apparatus can feed back four groups of second signals for the four beams (that is, M=4) of the UE_1 in step S702, and the first communication apparatus determines a third signal in the M first signals based on the information carried by the M groups of second signals. In other words, the first communication apparatus may determine a transmit beam (or an optimal transmit beam) of the first communication apparatus by using the M groups of second signals.

It should be noted that, in the processes shown in FIG. 8 and FIG. 9, for example, four feedback resources for feeding back four second signals by using a same beam of the UE_2 are consecutive in time domain. However, in actual application, the four feedback resources for feeding back four second signals by using a same beam of the UE_2 may be inconsecutive in time domain. For example, reference may be made to a time-domain location relationship of resources for sending different signals by using a same beam of the UE_1 in FIG. 8.

In this application, that a resource is located before or after another resource may mean a time relationship in time domain. For example, that a resource is located before another resource may be understood as that a resource index of the resource is less than a resource index of the another resource. Correspondingly, that a resource is located after another resource may be understood as that a resource index of the resource is greater than a resource index of the another resource.

Optionally, the process in which the first communication apparatus sends the M first signals in each of the N groups of time units may be understood as: The first communication apparatus sends N first signals in each of the M groups of time units. Correspondingly, for an implementation process in which the first communication apparatus sends the N first signals in each of the M groups of time units, refer to the implementation processes of the foregoing two implementation examples (for example, FIG. 8 or FIG. 9).

In a possible implementation, the signal quality information of the M first signals sent in the N groups of time units is used to determine a second group of time units in the N groups of time units. Specifically, after the first communication apparatus sends the M first signals in step S701, the second communication apparatus serves as a receiver of the M first signals, and the second communication apparatus may separately receive the M first signals in the N groups of time units by using the N beams. Then, the second communication apparatus may determine signal quality information respectively corresponding to the N groups of time units, determine a time unit corresponding to signal quality information with highest signal quality as the second group of time units, and determine a beam corresponding to the second group of time units as a receive beam (or an optimal receive beam) of the second communication apparatus. In other words, the second communication apparatus may determine the receive beam (or the optimal receive beam) of the second communication apparatus based on the signal quality information of the M first signals sent in the N groups of time units, and subsequently may receive a signal/information/data based on the receive beam, to improve receiving quality in the receiving process.

In this application, the signal quality information may be implemented in a plurality of manners, for example, at least one of a received signal strength indication (received signal strength indication, RSSI), reference signal received power (reference signal received power, RSRP), and reference signal received quality (reference signal received quality, RSRQ).

Optionally, when a receive beam and a transmit beam of the second communication apparatus are different, the second group of time units in the N groups of time units is different from the first group of time units.

Optionally, when a receive beam and a transmit beam of the second communication apparatus are the same, the second group of time units in the N groups of time units is the same as the first group of time units. Because the second communication apparatus may determine both the first group of time units and the second group of time units (that is, determine both the receive beam and the transmit beam) by using the signal quality information of the M first signals sent in the N groups of time units, the first communication apparatus may not send the first information in step S703 (that is, step S703 is an optional step), or the first communication apparatus may send empty information in the first information. In this manner, beam management overheads can be reduced.

In a possible implementation, X is less than N, the N groups of time units include X groups of time units, and the X groups of time units include the second group of time units and/or time units adjacent to the second group of time units; that the ith group of time domain resources in the M groups of time domain resources is a feedback resource for the ith first signal in the M first signals includes: a jth resource (j is a positive integer less than or equal to X) in X resources included in the ith group of time domain resources in the M groups of time domain resources is a feedback resource for the ith first signal in the M first signals in the jth group of resources in the X groups of resources. Specifically, when X is less than N, the X groups of time units may include a time unit corresponding to a receive beam of the second communication apparatus and/or time units adjacent to the time unit corresponding to the receive beam of the second communication apparatus. In addition, the M groups of time domain resources used to carry the M groups of second signals may be implemented in the foregoing manner. To be specific, the second communication apparatus serves as a signal receiver of the M first signals, and a transmit beam of the signal transmitter may be determined based on a relatively small quantity of groups of time units by using a resource configuration manner of a feedback resource corresponding to a signal sent by the signal transmitter, to reduce overheads.

Optionally, values M, N, and X may be preconfigured in a protocol/standard, or may be configured by the network device. This is not limited herein. Further, optionally, a value X may be associated with a parameter G, where the parameter G may be used to indicate a quantity of adjacent beams. In other words, X and G may satisfy X=G+1, or X=2G+1. The former is applicable to a case in which an adjacent beam exists on only one side of the optimal beam, and the latter is applicable to a case in which an adjacent beam exists on both sides of the optimal beam. In this manner, the value of the parameter G may be preconfigured in a protocol/standard, or may be configured by the network device, so that the first communication apparatus and/or the second communication apparatus can determine the value of X based on the value of the parameter G.

For example, in the foregoing example, when the N beams include seven beams (which are respectively a beam #y, a beam #y+1, a beam #y+2, a beam #y+3, a beam #y+4, a beam #y+6, and a beam #y+6, and y is a natural number), a beam with a relatively small difference (for example, 1 or 2) of index values may be considered as a neighboring beam.

If the second communication apparatus determines, based on the signal received quality of the M first signals received in the N groups of time units, that the optimal receive beam is the beam #y (that is, the second group of time units corresponds to the beam #y), because there is an adjacent beam on only one side of the beam #y (that is, index values of all the other six beams are greater than y), it may be determined that X=G+1.

Similarly, if the second communication apparatus determines, based on the signal received quality of the M first signals received in the N groups of time units, that the best receive beam is the beam #y+6 (that is, the second group of time units corresponds to the beam #y+6), because the beam #y has an adjacent beam only on one side (that is, index values of the other six beams are all less than y), it may be determined that X=G+1.

In addition, if the second communication apparatus determines, based on the signal received quality of the M first signals received in the N groups of time units, that the optimal receive beam is a beam other than the beam #y and the beam #y+6, because the optimal receive beam has adjacent beams on both sides, it may be determined that X=2G+1.

For example, the implementation solution shown in FIG. 8 may be simplified by using the solution shown in FIG. 10a. In the example shown in FIG. 10a, a value of N is 3, and a value of X is 2. In the example shown in FIG. 10a, when the UE_2 may determine, based on the first signal in step S701, that signal quality of the first signal received on the resource 1 on the left side of FIG. 10a is the highest, the UE_2 may determine that the "beam a of the UE_2" is the optimal receive beam of the UE_2. The best transmit beam of the UE_2 may be the best receive beam of the UE_2 or a beam adjacent to the best receive beam of the UE_2. Correspondingly, in step S702, the UE_2 may feed back the second signal on 8 (that is, in a case in which X=2 and M=4, X*M=8) feedback resources in the 12 feedback resources. Compared with the technical solution shown in FIG. 8, in FIG. 10a, the UE_2 may feed back the second signal on the resources 1 to 8 on the right side, and does not need to feed back the second signal on the resources 9 to 12.

Similarly, in FIG. 10b, compared with the technical solution shown in FIG. 9, in FIG. 10b, the UE_2 may feed back the second signal on the resources 1 to 8 on the right side, and does not need to feed back the second signal on the resources 9 to 12.

In this manner, a beam feedback failure can be avoided as much as possible by using an adjacent feedback resource, and overheads and implementation complexity of sending the second signal by the UE_2 can also be reduced.

In a possible implementation, the M groups of signal quality information of second signals are used to determine a fourth signal in the M second signals. Specifically, the first communication apparatus serves as a receiver of the M groups of second signals, and the first communication apparatus may separately receive the M groups of second signals based on the M beams. Then, the first communication apparatus may determine the signal quality information of the M groups of second signals, determine a second signal corresponding to signal quality information with highest signal quality as the fourth signal, and determine a beam corresponding to the fourth signal as a receive beam (or an optimal receive beam) of the first communication apparatus. In other words, the first communication apparatus may determine the receive beam (or the optimal receive beam) of the first communication apparatus based on the signal quality information of the M groups of second signals, and subsequently may receive a signal/information/data based on the receive beam, to improve receiving quality in the receiving process.

Optionally, when a receive beam and a transmit beam of the first communication apparatus are different, the third signal in the M first signals is different from the fourth signal.

Optionally, when a receive beam and a transmit beam of the first communication apparatus are the same, the third signal in the M first signals is the same as the fourth signal.

It can be learned from the foregoing descriptions of step S702 and the examples shown in FIG. 8 to FIG. 9 that, the third signal in the M first signals is determined based on the information carried in the M groups of second signals, that is, the first communication apparatus may determine a transmit beam (or an optimal transmit beam) of the first communication apparatus by using the M groups of second signals. The information carried by the M groups of second signals may be implemented in a plurality of manners. The following describes the information by using some implementation examples.

Implementation 1: An ith group of second signals in the M groups of second signals is used to carry an ith group of signal quality information in the M groups of signal quality information, where the ith group of signal quality information in the M groups of signal quality information indicates signal quality of the ith first signal in the M first signals, and a signal corresponding to signal quality information with highest signal quality in the M groups of signal quality information is the third signal.

In implementation 1, the information carried by the M groups of second signals may be specifically signal quality information corresponding to the M first signals, so that the first communication apparatus can determine the third signal in the M first signals by using the signal quality information of the M first signals received by the second communication apparatus. Therefore, in a manner of feeding back the signal quality information by the second communication apparatus, the first communication apparatus may determine the third signal in the M first signals, that is, the first communication apparatus may determine a transmit beam (or an optimal transmit beam) in the M beams.

Optionally, signal quality information (for example, signal quality information carried in M groups of second information, and signal quality information carried in the first information below) in this application may be mapped to different code domains for feedback in a quantization manner. For example, when the signal quality information is carried in the PSFCH, the quantized signal quality information may be carried by using a cyclic shift (Cyclic shift). For example, when the signal quality information is RSRP, the RSRP is divided in a range of [-30, -0] dBm. A sequence 1 "1 0 0 0 0" represents [-30, -20], a sequence 2 "0 1 0 0 0" represents [-20, -10], and a sequence 3 "0 0 1 0 0" represents [-10, 0]. Correspondingly, when an RSRP value of a received signal is - 27.538 dBm, the sequence 2 is used for representation, and the sequence 2 is fed back by using a PSFCH. In this manner of feeding back quantized information, implementation complexity can be reduced.

In addition, in the first implementation manner, the M groups of signal quality information may be implemented in a plurality of manners, and the following uses more examples for description.

In an implementation example, in the M groups of signal quality information, each group of signal quality information includes X pieces of signal quality information, and X pieces of signal quality information included in an ith group of signal quality information in the M groups of signal quality information is carried on X resources included in an ith group of time domain resources in the M groups of time domain resources. Specifically, in the M groups of signal quality information sent by the second communication apparatus, each group of signal quality information may include X pieces of signal quality information corresponding to signals carried on the X resources. Implementation complexity of the second communication apparatus can be reduced by feeding back an actual measurement value by the second communication apparatus.

It should be understood that X may be less than or equal to N. When X is equal to N, the foregoing implementation may be expressed as follows: N pieces of signal quality information included in the i^{th} group of signal quality information in the M groups of signal quality information are carried in the N resources included in the i^{th} group of time domain resources in the M groups of time domain resources.

Optionally, in the M groups of signal quality information, when each group of signal quality information includes X pieces of signal quality information, X pieces of signal quality information in different groups may be implemented in a plurality of manners.

For example, in the M groups of signal quality information, X pieces of signal quality information included in the i^{th} group of signal quality information are the same. Therefore, in a manner of feeding back the same signal quality information in the X time units, implementation complexity of identifying, by using the M groups of signal quality information, signal quality information with highest signal quality to determine the third signal can be improved.

For another example, a j^{th} piece of signal quality information in X pieces of signal quality information included in the i^{th} group of signal quality information in the M groups of signal quality information indicates signal quality of the i^{th} first signal in the M first signals in a j^{th} group of time units in X groups of time units included in the N groups of time units, where j is a positive integer less than or equal to X. Therefore, in a manner of feeding back signal quality information of each signal in the X time units, implementation complexity of sending the M groups of signal quality information by the first communication apparatus can be reduced.

In another implementation example, in the M groups of signal quality information, each group of signal quality information includes one piece of signal quality information, where one piece of signal quality information included in ith signal quality information in the M pieces of signal quality information is signal quality information of the ith first signal in the M first signals in X groups of signal quality information in X groups of time units included in the N groups of time units, and j is a positive integer less than or equal to X.

Specifically, in the M groups of signal quality information sent by the second communication apparatus, each group of signal quality information may include one piece of signal quality information with highest signal quality. In a manner in which the second communication apparatus feeds back a highest measurement value obtained after screening, implementation complexity of performing identification by the first communication apparatus in different signal quality information to determine the third signal can be reduced.

Implementation manner 2: The ith group of second signals in the M groups of second signals is used to carry the ith group of acknowledgement information in the M groups of acknowledgement information, where the ith group of acknowledgement information in the M groups of acknowledgement information indicates that an acknowledgement of the ith first signal in the M first signals is an acknowledgement or a negative acknowledgement, and a signal corresponding to a group of acknowledgement information in the M groups of acknowledgement information is the first signal.

In implementation 2, the information carried by the M groups of second signals may be specifically response information corresponding to the M first signals, so that the first communication apparatus can determine the third signal in the M first signals by using the response information of the M first signals received by the second communication apparatus. Therefore, in a manner of feeding back the acknowledgement information by the second communication apparatus, the first communication apparatus may determine the third signal in the M first signals, that is, the first communication apparatus may determine a transmit beam (or an optimal transmit beam) in the M beams.

In an implementation example, in the M groups of acknowledgement information, each group of acknowledgement information includes X pieces of acknowledgement information, and X pieces of acknowledgement information included in an ith group of acknowledgement information in the M groups of acknowledgement information is carried on X resources included in an ith group of time domain resources in the M groups of time domain resources. Specifically, in the M groups of acknowledgement information sent by the second communication apparatus, each group of acknowledgement information may include X pieces of acknowledgement information corresponding to signals carried on the X resources. In a manner in which the second communication apparatus feeds back acknowledgement information corresponding to each first signal, implementation complexity of the second communication apparatus can be reduced.

Optionally, in the M groups of acknowledgement information, X pieces of acknowledgement information included in the i^{th} group of acknowledgement information are all acknowledgement or negative acknowledgement. Therefore, in a manner in which the second communication apparatus feeds back acknowledgement information obtained through screening, implementation complexity of performing identification by the first communication apparatus in different acknowledgement information to determine the third signal can be reduced.

In another implementation example, in the M groups of response information, each group of response information includes one piece of response information. Specifically, in the M groups of acknowledgement information sent by the second communication apparatus, each group of acknowledgement information may include one piece of acknowledgement information. In a manner in which the second communication apparatus feeds back the filtered acknowledgement information, implementation complexity of performing identification by the first communication apparatus in different signal quality information to determine the third signal can be reduced.

In a possible implementation, the M groups of time domain resources include a first group of time domain resources, the first group of time domain resources is a feedback resource for the third signal, the first information is carried in a second group of time domain resources, and the second group of time domain resources is a feedback resource for the first group of time domain resources. Specifically, after the first communication apparatus sends the M first signals, the first communication apparatus may receive the M groups of second signals on the feedback resources (that is, the M groups of time domain resources) corresponding to the M first signals. Correspondingly, after the first communication apparatus determines the third signal, the first communication apparatus may determine, in the M groups of time domain resources, that the feedback resource for the third signal is the first group of time domain resources. Then, the first communication apparatus may send the first information on the feedback resources (namely, the second group of time domain resources) for the first group of time domain resources, so that the second communication apparatus can receive the first information on the second group of time domain resources, and subsequently can further determine the first group of time units in the N groups of time units based on the first information.

Optionally, the second group of time domain resources includes X time domain units, where a jth time domain unit in the X time domain units included in the second group of time domain resources is a feedback resource for a jth resource in the X resources included in the first group of time domain resources, and j is a positive integer less than or equal to X. Specifically, the second group of time domain resources is a feedback resource of the first group of time domain resources. Correspondingly, the second group of time domain resources may include X time domain units, so that the first communication apparatus may send the first information on some or all of the X time domain units. In other words, the second communication apparatus may receive the first information on some or all of the X time domain units. The second communication apparatus serves as a signal receiver of the M first signals. In this resource configuration manner, a transmit beam (or an optimal transmit beam) of the signal receiver can be determined.

Optionally, the second group of time domain resources may be configured in a configuration manner or a preconfiguration manner.

Optionally, the second group of time domain resources is a feedback resource of the first group of time domain resources, and a mapping relationship between the second group of time domain resources and the first group of time domain resources may also be configured or preconfigured, for example, may be configured or preconfigured by using a resource index.

In addition, the first information sent by the first communication apparatus in step S703 may be implemented in a plurality of manners. The following provides descriptions with reference to some examples.

Implementation A: The first information sent by the first communication apparatus in step S703 may include X pieces of signal quality information, and the jth time domain unit in the X time domain units is used to carry the jth piece of signal quality information in the X pieces of signal quality information. A jth piece of signal quality information in the X pieces of signal quality information indicates signal quality of a signal carried in a jth time unit in X resources included in the first group of time domain resources, a time unit of signal quality information with highest signal quality in the X pieces of signal quality information corresponds to the first group of time units, and j is a positive integer less than or equal to X.

Implementation B: The first information sent by the first communication apparatus in step S703 includes X pieces of acknowledgement information, and the jth time domain unit in the X time domain units is used to carry the jth piece of acknowledgement information in the X pieces of acknowledgement information. The jth piece of acknowledgement information in the X pieces of acknowledgement information indicates that an acknowledgement of a signal carried in the jth time unit in the X resources included in the first group of time domain resources is an acknowledgement or a negative acknowledgement, a time unit corresponding to a group of acknowledgement information in the X pieces of acknowledgement information is the first group of time units, and j is a positive integer less than or equal to X.

In the implementation A or the implementation B, the second group of time domain resources is a feedback resource of the first group of time domain resources, and X time domain units included in the second group of time domain resources may carry X pieces of signal quality information (or X pieces of acknowledgement information), so that the second communication apparatus can determine the first group of time units based on the X pieces of signal quality information (or the X pieces of acknowledgement information), that is, determine a transmit beam (or an optimal transmit beam) of the second communication apparatus.

Implementation C: The first information sent by the first communication apparatus in step S703 may include one piece of signal quality information or one piece of acknowledgement information, one of the X time domain units is used to carry the one piece of signal quality information or the one piece of acknowledgement information, and the one time domain unit corresponds to the first group of time units. Specifically, the second group of time domain resources is a feedback resource of the first group of time domain resources, and one piece of signal quality information (or one piece of acknowledgement information) may be carried in the X time domain units included in the second group of time domain resources, so that the second communication apparatus can determine the first group of time units based on the one piece of signal quality information (or one piece of acknowledgement information), that is, determine a transmit beam (or an optimal transmit beam) of the second communication apparatus, and overheads can also be reduced.

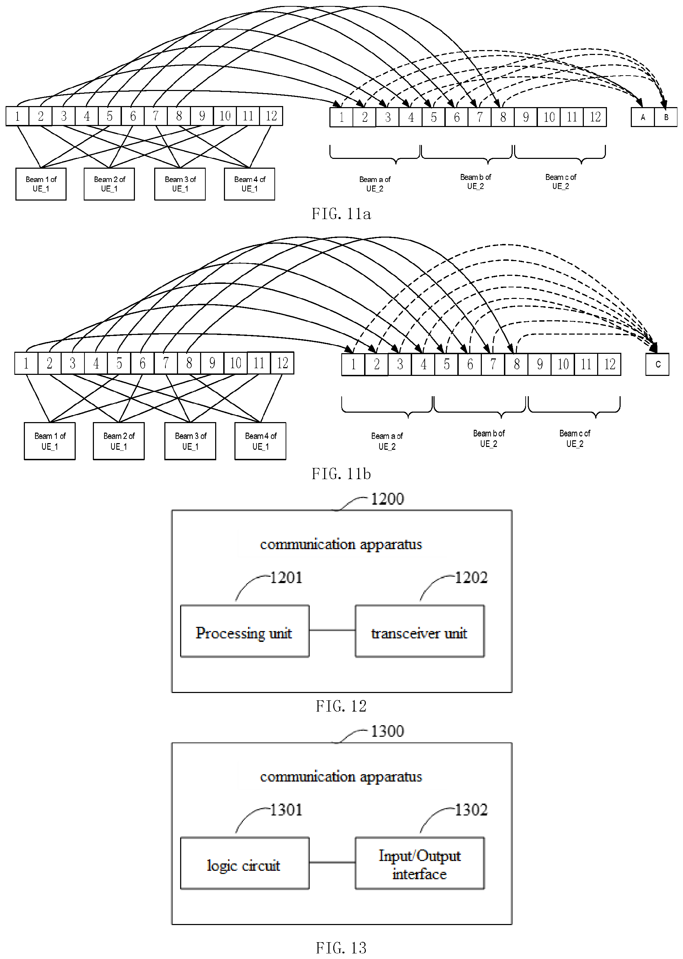

FIG. 11a is an implementation example of an implementation A to an implementation C. In FIG. 11a, for implementation of beams 1 to 4 of UE_1 and beams a to c of UE_2, refer to the foregoing implementation process shown in FIG. 10a, that is, a value of X is 2. Compared with FIG. 10a, in FIG. 11a, in an implementation process of step S702, after the UE_2 sends the M groups of second signals by using the beams a and b, the UE_1 may determine an optimal transmit beam of the UE_2 based on the M groups of second signals. Then, the UE_1 may indicate, by using the first information sent in step S703, the first group of time units corresponding to the optimal transmit beam, that is, the first information is carried by using a feedback resource included in FIG. 11a. The feedback resource includes two (that is, X=2) resources, that is, a feedback resource corresponding to "beam a of UE_2" (that is, a resource A in FIG. 11a), and a feedback resource corresponding to "beam b of UE_2" (that is, a resource B in FIG. 11a).

For example, in an implementation A, a resource A in FIG. 11a may carry signal quality information fed back by the UE_1 for M groups of second information on resources 1 to 4 of "beam a of UE_2", and a resource B in FIG. 11a may carry signal quality information fed back by the UE_1 for M groups of second information on resources 5 to 8 of "beam b of UE_2". Subsequently, the UE_2 may separately receive the two pieces of signal quality information on the resource A and the resource B, and determine a resource corresponding to signal quality information with highest signal quality as the first group of time units. In this manner, the UE_2 may determine that the optimal transmit beam is "the beam a of the UE_2" or "the beam b of the UE_2".

For another example, in an implementation B, the resource A in FIG. 11a may carry response information of M groups of second information fed back by the UE_1 for a resource 1 to 4 of a "beam a of UE_2", and the resource B in FIG. 11a may carry response information of M groups of second information fed back by the UE_1 for a resource 5 to 8 of a "beam b of UE_2". Subsequently, the UE_2 may receive the two pieces of response information on the resource A and the resource B respectively, in addition, the acknowledgement information is a resource corresponding to the acknowledgement, and the first group of time units are determined. In this manner, the UE_2 may determine that the optimal transmit beam is "the beam a of the UE_2" or "the beam b of the UE_2".

For another example, in the implementation C, the resource A in FIG. 11a may carry signal quality information (or response information) fed back by the UE_1 for the M groups of second information on the resource 1 to the resource 4 of the "beam a of the UE_2", or the resource B in FIG. 11a may carry signal quality information (or response information) fed back by the UE_1 for the M groups of second information on the resource 5 to the resource 5 of the "beam b of the UE_2". Subsequently, the UE_2 may receive signal quality information (or response information) on one of the resource A and the resource B, receive empty information on the other resource (that is, the UE_1 sends an empty message or does not send a message), and determine a resource corresponding to the resource as the first group of time units. In this manner, the UE_2 may determine that the optimal transmit beam is "the beam a of the UE_2" or "the beam b of the UE_2".

Implementation D: The first information sent by the first communication apparatus in step S703 may include an index of the first group of time units. Specifically, the second group of time domain resources is a feedback resource of the first group of time domain resources. The first information carried on the second group of time domain resources may include an index of the first group of time units, so that the second communication apparatus can determine the first group of time units from the N groups of time units based on the index, to reduce implementation complexity of the second communication apparatus.

FIG. 11b is an implementation example of implementation D. In FIG. 11b, for implementation of the beams 1 to 4 of the UE_1 and the beams a to c of the UE_2, refer to the foregoing implementation process shown in FIG. 10a, that is, a value of X is 2. Compared with FIG. 10a, in FIG. 11b, in an implementation process of step S702, after the UE_2 sends the M groups of second signals by using the beams a and b, the UE_1 may determine an optimal transmit beam of the UE_2 based on the M groups of second signals. Then, the UE_1 may indicate, by using the first information sent in step S703, the first group of time units corresponding to the optimal transmit beam, that is, the first information is carried by using a feedback resource included in FIG. 11b. The feedback resource includes one resource, that is, a feedback resource corresponding to "the beam a of UE_2" and "the beam b of UE_2" (that is, a resource C in FIG. 11a).

For example, in implementation D, the resource C in FIG. 11a may carry an index or an identifier of "a beam a of UE_2", or the resource C in FIG. 11a may carry an index or an identifier of "a beam b of UE_2". Subsequently, the UE_2 may determine the first group of time units based on the resource corresponding to the index received on the resource C. In this manner, the UE_2 may determine that the optimal transmit beam is "the beam a of the UE_2" or "the beam b of the UE_2".

Based on the technical solution shown in FIG. 7, after the first communication apparatus sends the M signals in each of the N groups of time units by using the M communication beams in step S701, the first communication apparatus may determine, in step S702 based on the M groups of second signals, a third signal in the M first signals. In other words, the first communication apparatus may determine, in step S703 based on the third signal, a transmit beam corresponding to the third signal, subsequently, the first communication apparatus may send a signal/data/information or the like based on the transmit beam. The i^{th} group of second signals in the M groups of second signals is carried in the i^{th} group of time domain resources in the M groups of time domain resources, the i^{th} group of time domain resources in the M groups of time domain resources is the feedback resources for the i^{th} first signal in the M first signals. In other words, in addition to determining the third signal by using information carried in the M groups of second signals, the first communication apparatus may further determine a transmit beam (or an optimal transmit beam) of the first communication apparatus based on a feedback resource corresponding to the third signal. Therefore, the first communication apparatus serves as a signal transmitter of the M first signals, and a transmit beam of the signal transmitter may be determined by using a resource configuration manner of a feedback resource corresponding to a signal sent by the signal transmitter, to implement beam management.

In addition, the first communication apparatus may further send the first information in step S703, so that a receiver (that is, a signal receiver of the M first signals, for example, the second communication apparatus) of the first information determines the first group of time units in the N groups of time units based on the first information. In other words, a transmit beam (or an optimal transmit beam) of the signal receiver may be determined by using the first information sent by the signal transmitter, to implement beam management.

It can be learned from the foregoing implementation process that, compared with the technical solution shown in FIG. 6, in the implementation process shown in FIG. 7, the first communication apparatus may be the UE_1, and the second communication apparatus may be the UE_2. In step S701, UE_2 receives M first signals (that is, reference signals) sent by UE_1 by using M beams, and the UE_2 may determine "an optimal receive beam of the UE_2 and an optimal transmit beam of the UE_1" based on measurement results of the M first signals. In addition, in step S702, the UE_2 may feed back "an optimal receive beam of the UE_1" by using information carried by the M groups of second signals. Correspondingly, the UE_1 may determine an optimal receive beam of the UE_1 and an optimal transmit beam of the UE_2 based on the received quality of the M groups of second signals. To be specific, the UE_1 may determine the optimal receive beam of the UE_1, the optimal receive beam of the UE_1, and the optimal transmit beam of the UE_2 based on step S702. Then, the UE_1 may feed back "the optimal transmit beam of the UE_2" by using the first information, so that the UE_2 may determine "the optimal transmit beam of the UE_2" in step S703. According to the foregoing interaction process, beam management can be implemented when the signal transmitter and/or the signal receiver do/does not support beam correspondence, thereby avoiding a communication failure caused by the fact that beam correspondence is not supported, and improving communication efficiency.

The foregoing describes embodiments of this application from a perspective of the method. The following further describes a communication apparatus provided in this application.

FIG. 12 is a diagram of a communication apparatus 1200 according to this application. The communication apparatus 1200 includes a processing unit 1201 and a transceiver unit 1202. The communication apparatus 1200 can implement a function of any communication apparatus (for example, the first communication apparatus or the second communication apparatus) in the foregoing method embodiments, and therefore can also achieve the beneficial effects of the foregoing method embodiments.

It should be understood that the communication apparatus 1200 may be a terminal device (for example, the first communication apparatus or the second communication apparatus), or may be an integrated circuit, an element, or the like in a terminal device (for example, the first communication apparatus or the second communication apparatus), for example, a chip.

In a possible implementation, when the apparatus 1200 is configured to perform the method performed by the first communication apparatus in the foregoing embodiments, the processing unit 1201 and the transceiver unit 1202 that are included in the apparatus 1200 are configured to implement the following process. The transceiver unit 1202 is configured to send M first signals in each of N groups of time units, where the M first signals are respectively carried in M time units in each group of time units, and both N and M are integers greater than 1; the transceiver unit 1202 is further configured to receive M groups of second signals, where the M groups of second signals are used to determine a third signal in the M first signals, an i^{th} group of second signals in the M groups of second signals is carried in an i^{th} group of time domain resources in M groups of time domain resources, the i^{th} group of time domain resources in the M groups of time domain resources is feedback resources for an i^{th} first signal in the M first signals, each of the M groups of time domain resources includes X resources, i is a positive integer less than or equal to M, and X is a positive integer less than or equal to N; the processing unit 1201 is configured to determine the first information; and the transceiver unit 1202 is further configured to send first information, where the first information is used to determine a first group of time units in the N groups of time units.

In a possible implementation, when the apparatus 1200 is configured to perform the method performed by the second communication apparatus in the foregoing embodiments, the processing unit 1201 and the transceiver unit 1202 that are included in the apparatus 1200 are configured to implement the following process. The transceiver unit 1202 is configured to receive M first signals in each of N groups of time units, where the M first signals are respectively carried in M time units in each group of time units, and both N and M are integers greater than 1; the processing unit 1201 is configured to determine M groups of second signals; the transceiver unit 1202 is further configured to send the M groups of second signals, where the M groups of second signals are used to determine a third signal in the M second signals, the M groups of second signals are carried in M groups of time domain resources, the M groups of time domain resources are respectively feedback resources for the M first signals, each of the M groups of time domain resources includes X resources, i is a positive integer less than or equal to M, and X is a positive integer less than or equal to N; and the transceiver unit 1202 is further configured to receive first information, where the first information is used to determine a first group of time units in the N groups of time units.

It should be noted that, for content such as an information execution process of the units in the communication apparatus 1200, refer to the descriptions in the foregoing method embodiments of this application. Details are not described herein again.

FIG. 13 is another diagram of a structure of a communication apparatus 1300 according to this application. The communication apparatus 1300 includes at least an input/output interface 1302. The communication apparatus 1300 may be a chip or an integrated circuit.

Optionally, the communication apparatus further includes a logic circuit 1301.

The transceiver unit 1202 shown in FIG. 12 may be a communication interface. The communication interface may be the input/output interface 1302 in FIG. 13. The input/output interface 1302 may include an input interface and an output interface. Alternatively, the communication interface may be a transceiver circuit, and the transceiver circuit may include an input interface circuit and an output interface circuit.

The logic circuit 1301 and the input/output interface 1302 can perform other steps performed by the terminal device in any one of the foregoing embodiments and implement corresponding beneficial effects. Details are not described herein again.

In a possible implementation, the processing unit 1201 shown in FIG. 12 may be the logic circuit 1301 in FIG. 13.

Optionally, the logic circuit 1301 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processing units (central processing unit, CPU), network processors (network processor, NP), digital signal processors (digital signal processor, DSP), microcontroller units (microcontroller unit, MCU), programmable logic devices (programmable logic device, PLD), or other integrated chips, or any combination of the foregoing chips or processors.

In a possible implementation, the communication apparatus 1300 may be configured to perform a function related to the first communication apparatus in the foregoing embodiments. The input/output interface 1302 is configured to send M first signals in each of N groups of time units, where the M first signals are respectively carried in M time units in each group of time units, and both N and M are integers greater than 1; the input/output interface 1302 is further configured to receive M groups of second signals, where the M groups of second signals are used to determine a third signal in the M first signals, an i^{th} group of second signals in the M groups of second signals is carried in an i^{th} group of time domain resources in M groups of time domain resources, the i^{th} group of time domain resources in the M groups of time domain resources is feedback resources for an i^{th} first signal in the M first signals, each of the M groups of time domain resources includes X resources, i is a positive integer less than or equal to M, and X is a positive integer less than or equal to N; the logic circuit 1301 is configured to determine the first information; and the input/output interface 1302 is further configured to send first information, where the first information is used to determine a first group of time units in the N groups of time units.

In a possible implementation, the communication apparatus 1300 may be configured to perform a function related to the second communication apparatus in the foregoing embodiments. The input/output interface 1302 is configured to receive M first signals in each of N groups of time units, where the M first signals are respectively carried in M time units in each group of time units, and both N and M are integers greater than 1; the logic circuit 1301 is configured to determine M groups of second signals; the input/output interface 1302 is further configured to send the M groups of second signals, where the M groups of second signals are used to determine a third signal in the M second signals, the M groups of second signals are carried in M groups of time domain resources, the M groups of time domain resources are respectively feedback resources for the M first signals, each of the M groups of time domain resources includes X resources, i is a positive integer less than or equal to M, and X is a positive integer less than or equal to N; and the input/output interface 1302 is further configured to receive first information, where the first information is used to determine a first group of time units in the N groups of time units.

It should be noted that, for content such as an information execution process of the units in the communication apparatus 1300, refer to the descriptions in the foregoing method embodiments of this application. Details are not described herein again.

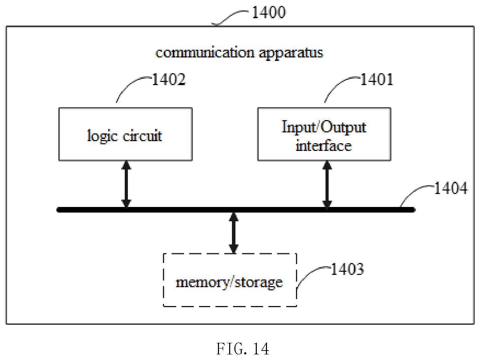

FIG. 14 shows a communication apparatus 1400 in the foregoing embodiments according to an embodiment of this application.

For example, the communication apparatus 1400 may be specifically a communication apparatus used as a terminal device in the foregoing embodiments.

In a diagram of a possible logical structure of the communication apparatus 1400, the communication apparatus 1400 may include but is not limited to at least one processor 1401 and a communication port 1402.

Further, optionally, the apparatus may further include at least one of a memory 1403 and a bus 1404. In this embodiment of this application, the at least one processor 1401 is configured to control and process an action of the communication apparatus 1400.

In addition, the processor 1401 may be a central processing unit, a general-purpose processor, a digital signal processor, an application-specific integrated circuit, a field programmable gate array or another programmable logic device, a transistor logic device, a hardware component, or any combination thereof. The processor may implement or execute logical blocks, modules, and circuits in various examples described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing described system, apparatus, and unit, refer to a corresponding process in the foregoing method embodiment. Details are not described herein again.

It should be noted that the communication apparatus 1400 shown in FIG. 14 may be specifically configured to implement steps implemented by the communication apparatus (for example, the first communication apparatus or the second communication apparatus) in the foregoing method embodiments, and implement technical effects corresponding to the communication apparatus. For a specific implementation of the communication apparatus shown in FIG. 14, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method in the possible implementations of the first communication apparatus or the second communication apparatus in the foregoing embodiments.

An embodiment of this application further provides a computer program product (also referred to as a computer program). When the computer program product is executed by a processor, the processor performs the method in the possible implementations of the first communication apparatus or the second communication apparatus.

An embodiment of this application further provides a chip system. The chip system includes at least one processor, configured to support a communication apparatus in implementing the functions in the foregoing possible implementations of the communication apparatus. Optionally, the chip system further includes an interface circuit, where the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first communication apparatus or the second communication apparatus in the foregoing method embodiments.

An embodiment of this application further provides a communication system. An architecture of the network system includes the first communication apparatus and the second communication apparatus in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit. When the integrated unit is implemented in a form of a software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
sending M first signals in each of N groups of time units, wherein the M first signals are respectively carried in M time units in each group of time units, and both N and M are integers greater than 1;
receiving M groups of second signals, wherein the M groups of second signals are used to determine a third signal in the M first signals, an i^{th} group of second signals in the M groups of second signals is carried in an i^{th} group of time domain resources in M groups of time domain resources, the i^{th} group of time domain resources in the M groups of time domain resources is feedback resources for an i^{th} first signal in the M first signals, each of the M groups of time domain resources comprises X resources, i is a positive integer less than or equal to M, and X is a positive integer less than or equal to N; and
sending first information, wherein the first information is used to determine a first group of time units in the N groups of time units.

2. The method according to claim 1, wherein signal quality information of the M first signals sent in the N groups of time units is used to determine a second group of time units in the N groups of time units.

3. The method according to claim 2, wherein X is less than N, the N groups of time units comprise X groups of time units, and the X groups of time units comprise the second group of time units and/or time units adjacent to the second group of time units; and
that the i^{th} group of time domain resources in the M groups of time domain resources is the feedback resources for the i^{th} first signal in the M first signals comprises:
a j^{th} resource in X resources comprised in the i^{th} group of time domain resources in the M groups of time domain resources is a feedback resource for the i^{th} first signal in the M first signals in a j^{th} group of resources in X groups of resources, and j is a positive integer less than or equal to X.

4. The method according to any one of claims 1 to 3, wherein signal quality information of the M groups of second signals is used to determine a fourth signal in the M second signals.

5. The method according to any one of claims 1 to 4, wherein an i^{th} group of second signals in the M groups of second signals is used to carry an i^{th} group of signal quality information in M groups of signal quality information; and
the i^{th} group of signal quality information in the M groups of signal quality information indicates signal quality of the i^{th} first signal in the M first signals, and a signal corresponding to signal quality information with highest signal quality in the M groups of signal quality information is the third signal.

6. The method according to claim 5, wherein
in the M groups of signal quality information, each group of signal quality information comprises X pieces of signal quality information, wherein X pieces of signal quality information comprised in the i^{th} group of signal quality information in the M groups of signal quality information are carried in the X resources comprised in the i^{th} group of time domain resources in the M groups of time domain resources;
or
in the M groups of signal quality information, each group of signal quality information comprises one piece of signal quality information, wherein one piece of signal quality information comprised in the i^{th} piece of signal quality information in the M pieces of signal quality information is signal quality information with highest signal quality in X pieces of signal quality information of the i^{th} first signal in the M first signals in the X groups of time units comprised in the N groups of time units.

7. The method according to any one of claims 1 to 4, wherein an i^{th} group of second signals in the M groups of second signals is used to carry an i^{th} group of acknowledgement information in M groups of acknowledgement information; and
the i^{th} group of acknowledgement information in the M groups of acknowledgement information indicates that acknowledgement for the i^{th} first signal in the M first signals is acknowledgement or negative acknowledgement, and a signal corresponding to a group of acknowledgement information indicating acknowledgement in the M groups of acknowledgement information is the first signal.

8. The method according to claim 7, wherein
in the M groups of acknowledgement information, each group of acknowledgement information comprises X pieces of acknowledgement information, wherein X pieces of acknowledgement information comprised in the i^{th} group of acknowledgement information in the M groups of acknowledgement information are carried in the X resources comprised in the i^{th} group of time domain resources in the M groups of time domain resources;
or
in the M groups of acknowledgement information, each group of acknowledgement information includes one piece of acknowledgement information.

9. The method according to any one of claims 1 to 8, wherein the M groups of time domain resources comprise a first group of time domain resources, the first group of time domain resources is feedback resources for the third signal, the first information is carried in a second group of time domain resources, and the second group of time domain resources is feedback resources for the first group of time domain resources.

10. The method according to claim 9, wherein the second group of time domain resources comprises X time domain units, a j^{th} time domain unit in X time domain units comprised in the second group of time domain resources is a feedback resource for a j^{th} resource in X resources comprised in the first group of time domain resources, and j is a positive integer less than or equal to X.

11. The method according to claim 10, wherein
the first information comprises X pieces of signal quality information, and the j^{th} time domain unit in the X time domain units is used to carry a j^{th} piece of signal quality information in the X pieces of signal quality information, wherein the j^{th} piece of signal quality information in the X pieces of signal quality information indicates signal quality of a signal carried in a j^{th} time unit in the X resources comprised in the first group of time domain resources, and a time unit for signal quality information with highest signal quality in the X pieces of signal quality information corresponds to the first group of time units;
or
the first information comprises X pieces of acknowledgement information, and the j^{th} time domain unit in the X time domain units is used to carry a j^{th} piece of acknowledgement information in the X pieces of acknowledgement information, wherein the j^{th} piece of acknowledgement information in the X pieces of acknowledgement information indicates that acknowledgement for a signal carried in a j^{th} time unit in the X resources comprised in the first group of time domain resources is acknowledgement or negative acknowledgement, and a time unit corresponding to a group of acknowledgement information indicating acknowledgement in the X pieces of acknowledgement information is the first group of time units;
or
the first information comprises one piece of signal quality information or one piece of acknowledgement information, and one of the X time domain units is used to carry the one piece of signal quality information or the one piece of acknowledgement information, wherein the one time domain unit corresponds to the first group of time units.

12. The method according to claim 9, wherein the first information comprises an index of the first group of time units.

13. A communication method, comprising:
receiving M first signals in each of N groups of time units, wherein the M first signals are respectively carried in M time units in each group of time units, and both N and M are integers greater than 1;
sending M groups of second signals, wherein the M groups of second signals are used to determine a third signal in the M second signals, the M groups of second signals are carried in M groups of time domain resources, the M groups of time domain resources are respectively feedback resources for the M first signals, each of the M groups of time domain resources comprises X resources, i is a positive integer less than or equal to M, and X is a positive integer less than or equal to N; and
receiving first information, wherein the first information is used to determine a first group of time units in the N groups of time units.

14. The method according to claim 13, wherein signal quality information of the M first signals sent in the N groups of time units is used to determine a second group of time units in the N groups of time units.

15. The method according to claim 14, wherein X is less than N, the N groups of time units comprise X groups of time units, and the X groups of time units comprise the second group of time units and/or time units adjacent to the second group of time units; and
that the i^{th} group of time domain resources in the M groups of time domain resources is the feedback resources for the i^{th} first signal in the M first signals comprises:
a j^{th} resource in X resources comprised in the i^{th} group of time domain resources in the M groups of time domain resources is a feedback resource for the i^{th} first signal in the M first signals in a j^{th} group of resources in X groups of resources, and j is a positive integer less than or equal to X.

16. The method according to any one of claims 13 to 15, wherein signal quality information of the M groups of second signals is used to determine a fourth signal in the M second signals.

17. The method according to any one of claims 13 to 16, wherein an i^{th} group of second signals in the M groups of second signals is used to carry an i^{th} group of signal quality information in M groups of signal quality information; and
the i^{th} group of signal quality information in the M groups of signal quality information indicates signal quality of the i^{th} first signal in the M first signals, and a signal corresponding to signal quality information with highest signal quality in the M groups of signal quality information is the third signal.

18. The method according to claim 17, wherein
in the M groups of signal quality information, each group of signal quality information comprises X pieces of signal quality information, wherein X pieces of signal quality information comprised in the i^{th} group of signal quality information in the M groups of signal quality information are carried in the X resources comprised in the i^{th} group of time domain resources in the M groups of time domain resources;
or
in the M groups of signal quality information, each group of signal quality information comprises one piece of signal quality information, wherein one piece of signal quality information comprised in the i^{th} piece of signal quality information in the M pieces of signal quality information is signal quality information with highest signal quality in X pieces of signal quality information of the i^{th} first signal in the M first signals in the X groups of time units comprised in the N groups of time units.

19. The method according to any one of claims 13 to 16, wherein an i^{th} group of second signals in the M groups of second signals is used to carry an i^{th} group of acknowledgement information in M groups of acknowledgement information; and
the i^{th} group of acknowledgement information in the M groups of acknowledgement information indicates that acknowledgement for the i^{th} first signal in the M first signals is acknowledgement or negative acknowledgement, and a signal corresponding to a group of acknowledgement information indicating acknowledgement in the M groups of acknowledgement information is the first signal.

20. The method according to claim 19, wherein
in the M groups of acknowledgement information, each group of acknowledgement information comprises X pieces of acknowledgement information, wherein X pieces of acknowledgement information comprised in the i^{th} group of acknowledgement information in the M groups of acknowledgement information are carried in the X resources comprised in the i^{th} group of time domain resources in the M groups of time domain resources;
or
in the M groups of acknowledgement information, each group of acknowledgement information includes one piece of acknowledgement information.

21. The method according to any one of claims 13 to 20, wherein the M groups of time domain resources comprise a first group of time domain resources, the first group of time domain resources is feedback resources for the third signal, the first information is carried in a second group of time domain resources, and the second group of time domain resources is feedback resources for the first group of time domain resources.

22. The method according to claim 21, wherein the second group of time domain resources comprises X time domain units, a j^{th} time domain unit in X time domain units comprised in the second group of time domain resources is a feedback resource for a j^{th} resource in X resources comprised in the first group of time domain resources, and j is a positive integer less than or equal to X.

23. The method according to claim 22, wherein
the first information comprises X pieces of signal quality information, and the j^{th} time domain unit in the X time domain units is used to carry a j^{th} piece of signal quality information in the X pieces of signal quality information, wherein the j^{th} piece of signal quality information in the X pieces of signal quality information indicates signal quality of a signal carried in a j^{th} time unit in the X resources comprised in the first group of time domain resources, and a time unit for signal quality information with highest signal quality in the X pieces of signal quality information corresponds to the first group of time units;
or
the first information comprises X pieces of acknowledgement information, and the j^{th} time domain unit in the X time domain units is used to carry a j^{th} piece of acknowledgement information in the X pieces of acknowledgement information, wherein the j^{th} piece of acknowledgement information in the X pieces of acknowledgement information indicates that acknowledgement for a signal carried in a j^{th} time unit in the X resources comprised in the first group of time domain resources is acknowledgement or negative acknowledgement, and a time unit corresponding to a group of acknowledgement information indicating acknowledgement in the X pieces of acknowledgement information is the first group of time units;
or
the first information comprises one piece of signal quality information or one piece of acknowledgement information, and one of the X time domain units is used to carry the one piece of signal quality information or the one piece of acknowledgement information, wherein the one time domain unit corresponds to the first group of time units.

24. The method according to claim 21, wherein the first information comprises an index of the first group of time units.

25. A communication apparatus, comprising a module configured to perform the method according to any one of claims 1 to 24.

26. A communication apparatus, comprising at least one processor, wherein the at least one processor is coupled to a memory, and the at least one processor is configured to perform the method according to any one of claims 1 to 24.

27. The communication apparatus according to claim 26, wherein the communication apparatus is a chip or a chip system.

28. A readable storage medium, wherein the storage medium stores a computer program or instructions, and when the computer program or the instructions are executed by a communication apparatus, the method according to any one of claims 1 to 24 is implemented.

29. A computer program product, comprising instructions, wherein when the instructions are run on a computer, the computer is enabled to perform the method according to any one of claims 1 to 24.
